(19) Europäisches Patentamt European Patent Office Office européen des brevets

(11) **EP 4 460 064 A1**

(12) **EUROPEAN PATENT APPLICATION**
published in accordance with Art. 153(4) EPC

(43) Date of publication:
**06.11.2024 Bulletin 2024/45**

(21) Application number: **23746041.5**

(22) Date of filing: **16.01.2023**

(51) International Patent Classification (IPC):
***H04W 16/10*** (2009.01)

(52) Cooperative Patent Classification (CPC):
**H04W 16/10; H04W 36/00; H04W 72/0446;**
**H04W 72/0453**

(86) International application number:
**PCT/CN2023/072294**

(87) International publication number:
**WO 2023/143159 (03.08.2023 Gazette 2023/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.01.2022 CN 202210114048**

(71) Applicant: **Huawei Technologies Co., Ltd.**
**Shenzhen, Guangdong 518129 (CN)**

(72) Inventors:
• **MA, Qianli**
**Shenzhen, Guangdong 518129 (CN)**
• **HUANG, Huang**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **SYMBOL PROCESSING METHOD AND APPARATUS**

(57) This application provides a symbol processing method and apparatus. The method includes: A transmitting end generates a first transmit symbol and a second transmit symbol. A length of a cyclic prefix of the first transmit symbol is greater than a length of a cyclic prefix that corresponds to a subcarrier spacing of the first transmit symbol. The transmitting end sends the first transmit symbol and the second transmit symbol. The first transmit symbol and the second transmit symbol are consecutive in time domain. The first transmit symbol is located after the second transmit symbol. The first transmit symbol is a symbol that carries a reference signal, and the second transmit symbol is a symbol that carries a data signal. According to the technical solutions provided in this application, a guard interval of a DMRS symbol can be extended without affecting a subcarrier spacing of the DMRS symbol.

A transmitting end generates a first transmit symbol and a second transmit symbol, where a length of a cyclic prefix of the first transmit symbol is greater than a length of a cyclic prefix that corresponds to a subcarrier spacing of the first transmit symbol — S410

The transmitting end sends the first transmit symbol and the second transmit symbol, where the first transmit symbol and the second transmit symbol are consecutive in time domain, and the first transmit symbol is located after the second transmit symbol; and the first transmit symbol is a symbol that carries a reference signal, and the second transmit symbol is a symbol that carries a data signal — S420

FIG. 4

## Description

This application claims priority to Chinese Patent Application No. 202210114048.X, filed with the China National Intellectual Property Administration on January 30, 2022 and entitled "SYMBOL PROCESSING METHOD AND APPARATUS", which is incorporated herein by reference in its entirety.

## TECHNICAL FIELD

This application relates to the communication field, and more specifically, to a symbol processing method and apparatus.

## BACKGROUND

To resist multipath effect of a channel, a technology of adding a guard interval between symbols is proposed. First, the guard interval can be used to eliminate inter-symbol interference (inter-symbol interference, ISI) between adjacent symbols; second, after a transmit symbol passes through a multipath channel, the guard interval is used to convert a linear convolution of the channel and the transmit symbol into a cyclic convolution of the channel and the transmit symbol, so that a symbol receiving end can eliminate the multipath effect of the channel by using a frequency domain equalization method.

Usually, a cyclic prefix (cyclic prefix, CP) is used as the guard interval between the symbols. The cyclic prefix is a cyclic structure formed by copying a segment of signal at an end (also referred to as a tail) of a symbol to a front (also referred to as a header) of the symbol. In new radio (new radio, NR), lengths of CPs corresponding to different subcarrier spacings (subcarrier spacings, SCSs) are different. If a subcarrier spacing is set to an excessively large value, a length of a CP in a transmit symbol is excessively small correspondingly.

A demodulation reference signal (demodulation reference signal, DMRS) is a pilot symbol used for channel estimation. To improve channel estimation performance, a DMRS with a larger subcarrier spacing needs to be used, to improve a capability of the DMRS to resist Doppler effect. However, as the subcarrier spacing of the DMRS symbol extends, a guard interval of the DMRS symbol is reduced. When a multipath delay is greater than the guard interval of the DMRS symbol and less than a guard interval of a data symbol, performance of DMRS based channel estimation deteriorates.

How to extend the guard interval of the DMRS symbol without affecting the subcarrier spacing of the DMRS symbol is an urgent problem to be resolved.

## SUMMARY

Embodiments of this application provide a symbol processing method and apparatus, to extend a guard interval of a DMRS symbol without affecting a subcarrier spacing of the DMRS symbol.

According to a first aspect, a symbol processing method is provided. The method includes: A transmitting end generates a first transmit symbol and a second transmit symbol. A length of a cyclic prefix of the first transmit symbol is greater than a length of a cyclic prefix that corresponds to a subcarrier spacing of the first transmit symbol. The transmitting end sends the first transmit symbol and the second transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal.

In this application, the length of the cyclic prefix of the first transmit symbol is greater than the length of the cyclic prefix that corresponds to the subcarrier spacing of the first transmit symbol. In this way, a guard interval of the first transmit symbol is extended, and this helps eliminate multipath effect of a channel. When the first transmit symbol is a DMRS symbol, performance deterioration of DMRS based channel estimation can be avoided by extending a guard interval of the DMRS symbol.

With reference to the first aspect, in some implementations of the first aspect, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

In this application, the start location of the first subset is before the location for intercepting the cyclic prefix that corresponds to the subcarrier spacing in the first transmit symbol. Therefore, when the cyclic prefix of the first transmit symbol is the same as the first subset, the length of the cyclic prefix of the first transmit symbol is greater than the length of the cyclic prefix that corresponds to the subcarrier spacing of the first transmit symbol. In this way, the guard interval of the first transmit symbol is extended, and this helps eliminate the multipath effect of the channel. When the first transmit symbol is the DMRS symbol, the performance deterioration of the DMRS based channel estimation can be avoided by extending the guard interval of the DMRS symbol.

In addition, the start location of the first subset can be flexibly set by a network device based on an actual requirement. In other words, the length of the cyclic prefix of the first transmit symbol can be flexibly set. Therefore, a guard interval between symbols can be flexibly configured.

With reference to the first aspect, in some implementations of the first aspect, that a transmitting end generates a second transmit symbol includes: The transmitting end maps a first sequence to the second transmit symbol. The first sequence is used to replace a part of complex-valued symbols in the second transmit symbol. An end location for mapping the first sequence is an end location of the second transmit symbol.

In this application, the first sequence is a segment of special sequence. The first sequence is mapped to a tail of the second transmit symbol, or the end location for mapping the first sequence is the end location of the second transmit symbol. This helps avoid a problem that waveforms are inconsecutive at a symbol concatenated portion after the first transmit symbol and the second transmit symbol are directly concatenated, to enhance consecutiveness between the first transmit symbol and the second transmit symbol.

With reference to the first aspect, in some implementations of the first aspect, a difference between the length of the cyclic prefix of the first transmit symbol and the length of the cyclic prefix that corresponds to the subcarrier spacing of the first transmit symbol is less than a length of the first sequence.

With reference to the first aspect, in some implementations of the first aspect, the first sequence is an all-zero sequence; or the first sequence is the same as a second subset of the first transmit symbol; a start location of the second subset is before the start location of the first subset; and an end location of the second subset is the first reference point or after the first reference point.

In this application, the first transmit symbol is located after the second transmit symbol in time domain, and a location for mapping the first sequence to the second transmit symbol is the end location of the second transmit symbol. Therefore, the first sequence is located between the first transmit symbol and the second transmit symbol.

When the first sequence is the all-zero sequence, there is a segment of invalid information between the first transmit symbol and the second transmit symbol. Therefore, the problem that the waveforms are inconsecutive at the concatenated portion between the first transmit symbol and the second transmit symbol is avoided to some extent, to enhance the consecutiveness between the first transmit symbol and the second transmit symbol.

When the first sequence is the same as a part of complex-valued symbols in the second transmit symbol, the waveforms are made consecutive at the concatenated portion between the first transmit symbol and the second transmit symbol. Therefore, this avoids the problem that the waveforms are inconsecutive at the symbol concatenated portion after the first transmit symbol and the second transmit symbol are combined into consecutive signals, to enhance the consecutiveness between the first transmit symbol and the second transmit symbol.

With reference to the first aspect, in some implementations of the first aspect, that a transmitting end generates a second transmit symbol further includes: The transmitting end truncates the second transmit symbol. A truncation location is in the first sequence.

In this application, a part of signals in the first sequence are truncated, to help avoid an increase in a total length of a symbol caused by a fact that the length of the cyclic prefix of the first transmit symbol is greater than the length of the cyclic prefix that corresponds to the subcarrier spacing of the first transmit symbol.

With reference to the first aspect, in some implementations of the first aspect, when the first sequence is the all-zero sequence, a truncation length is the difference between the length of the cyclic prefix of the first transmit symbol and the length of the cyclic prefix that corresponds to the subcarrier spacing of the first transmit symbol. Alternatively, when the first sequence is the same as the second subset of the first transmit symbol, a truncation part is a same symbol part between a header of the first transmit symbol and the tail of the second transmit symbol.

When the first sequence is the same as the second subset of the first transmit symbol, the same symbol part between the header of the first transmit symbol and the tail of the second transmit symbol is truncated from the second transmit symbol, so that the waveforms can be made consecutive at the symbol concatenated portion after the first transmit symbol and the second transmit symbol are combined into the consecutive signals, to enhance the consecutiveness between the first transmit symbol and the second transmit symbol.

With reference to the first aspect, in some implementations of the first aspect, the method further includes: The transmitting end combines the generated first transmit symbol and second transmit symbol into the consecutive signals.

With reference to the first aspect, in some implementations of the first aspect, the first sequence is the same as the second subset of the first transmit symbol, and the method further includes: The transmitting end performs cyclic shift on at least one of the following: the second transmit symbol and the first transmit symbol, to obtain the same symbol part between the tail of the second transmit symbol and the header of the first transmit symbol.

In this application, through the cyclic shift, the same symbol part between the tail of the second transmit symbol and the header of the first transmit symbol can be obtained. Further, after a truncation operation, the waveforms are made consecutive at the symbol concatenated portion after the first transmit symbol and the second transmit symbol are combined into the consecutive signals.

With reference to the first aspect, in some implementations of the first aspect, after that the transmitting end truncates the second transmit symbol, the method further includes: The transmitting end sends a first message. The first message includes information about a remaining part of the first sequence after the second transmit symbol is truncated.

In this application, the first message includes the information about the remaining part of the first sequence. Therefore, a receiving end can decode, based on the first message, a part that is of the second transmit symbol and that is other than the first sequence, to obtain required data.

According to a second aspect, a symbol processing method is provided. The method includes: A receiving end obtains a first transmit symbol and a second transmit symbol. A length of a cyclic prefix of the first transmit symbol is greater than a length of a cyclic prefix that corresponds to a subcarrier spacing of the first transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal. The receiving end performs signal processing on the first transmit symbol and the second transmit symbol.

In this application, a start location of a first subset is before a location for intercepting the cyclic prefix that corresponds to the subcarrier spacing in the first transmit symbol. Therefore, when the cyclic prefix of the first transmit symbol is the same as the first subset, the length of the cyclic prefix of the first transmit symbol is greater than the length of the cyclic prefix that corresponds to the subcarrier spacing of the first transmit symbol. In this way, a guard interval of the first transmit symbol is extended, and this helps eliminate multipath effect of a channel. When the first transmit symbol is a DMRS symbol, performance deterioration of DMRS based channel estimation can be avoided by extending a guard interval of the DMRS symbol.

With reference to the second aspect, in some implementations of the second aspect, that the receiving end performs signal processing on the first transmit symbol and the second transmit symbol includes: The receiving end performs a cyclic prefix removal operation on the first transmit symbol and the second transmit symbol. Cyclic prefixes are cyclic prefixes that correspond to subcarrier spacings of the first transmit symbol and the second transmit symbol.

With reference to the second aspect, in some implementations of the second aspect, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

In this application, the start location of the first subset is before the location for intercepting the cyclic prefix that corresponds to the subcarrier spacing in the first transmit symbol. Therefore, when the cyclic prefix of the first transmit symbol is the same as the first subset, the length of the cyclic prefix of the first transmit symbol is greater than the length of the cyclic prefix that corresponds to the subcarrier spacing of the first transmit symbol. In this way, the guard interval of the first transmit symbol is extended, and this helps eliminate the multipath effect of the channel. When the first transmit symbol is the DMRS symbol, the performance deterioration of the DMRS based channel estimation can be avoided by extending the guard interval of the DMRS symbol.

In addition, the start location of the first subset can be flexibly set by a network device based on an actual requirement. In other words, the length of the cyclic prefix of the first transmit symbol can be flexibly set. Therefore, a guard interval between symbols can be flexibly configured.

With reference to the second aspect, in some implementations of the second aspect, the second transmit symbol includes a first sequence, and an end location of the first sequence is an end location of the second transmit symbol. The first sequence is an all-zero sequence; or the first sequence is the same as a third subset of the first transmit symbol, and an end location of the third subset is a location for intercepting the cyclic prefix in the first transmit symbol.

In this application, the first sequence is located between the first transmit symbol and the second transmit symbol.

When the first sequence is the all-zero sequence, there is a segment of invalid information between the first transmit symbol and the second transmit symbol. Therefore, a problem that waveforms are inconsecutive at a concatenated portion between the first transmit symbol and the second transmit symbol is avoided to some extent, to enhance consecutiveness between the first transmit symbol and the second transmit symbol.

When the first sequence is the same as a part of complex-valued symbols in the second transmit symbol, the waveforms are made consecutive at the concatenated portion between the first transmit symbol and the second transmit symbol. Therefore, this avoids the problem that the waveforms are inconsecutive at a symbol concatenated portion after the first transmit symbol and the second transmit symbol are combined into consecutive signals, to enhance the consecutiveness between the first transmit symbol and the second transmit symbol.

With reference to the second aspect, in some implementations of the second aspect, the method further includes: The receiving end obtains a first message. The first message includes information about the first sequence.

In this application, the first message can enable the receiving end to decode, based on the information about the first sequence, a part that is of the second transmit symbol and that is other than the first sequence, to obtain required data.

With reference to the second aspect, in some implementations of the second aspect, that the receiving end performs signal processing on the second transmit symbol includes: The receiving end decodes, based on the information about the first sequence, the part that is of the second transmit symbol and that is other than the first sequence, to obtain the data.

According to a third aspect, a symbol processing method is provided. The method includes: A transmitting end obtains a plurality of complex-valued symbols. The transmitting end divides the plurality of complex-valued symbols into a plurality of sets. Each set corresponds to one transmit symbol. The plurality of sets include a first set that corresponds to a first transmit symbol and a second set that corresponds to a second transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal. The transmitting end performs signal processing on the first set and the second set. The signal processing includes cyclic prefix addition. The signal processing enables a length of a cyclic prefix of the first transmit symbol to be greater than a length of a cyclic prefix that corresponds to a subcarrier spacing of the first transmit symbol.

In this application, signal processing is performed on the first transmit symbol, so that the length of the cyclic prefix of the first transmit symbol is greater than the length of the cyclic prefix that corresponds to the subcarrier spacing of the first transmit symbol. In this way, a guard interval of the first transmit symbol is extended, and this helps eliminate multipath effect of a channel. When the first transmit symbol is a DMRS symbol, performance deterioration of DMRS based channel estimation can be avoided by extending a guard interval of the DMRS symbol.

With reference to the third aspect, in some implementations of the third aspect, that the transmitting end performs signal processing on the first set includes: The transmitting end performs a copy operation on a first subset in the first set, so that the first subset is used as the cyclic prefix of the first transmit symbol. A start location of the first subset is before a first reference point of the first transmit symbol, and an end location of the first subset is an end location of the first transmit symbol. The first reference point is a location for intercepting the cyclic prefix that corresponds to the subcarrier spacing in the first transmit symbol.

In this application, the start location of the first subset is before the location for intercepting the cyclic prefix that corresponds to the subcarrier spacing in the first transmit symbol. Therefore, when the cyclic prefix of the first transmit symbol is the same as the first subset, the length of the cyclic prefix of the first transmit symbol is greater than the length of the cyclic prefix that corresponds to the subcarrier spacing of the first transmit symbol. In this way, the guard interval of the first transmit symbol is extended, and this helps eliminate the multipath effect of the channel. When the first transmit symbol is the DMRS symbol, the performance deterioration of the DMRS based channel estimation can be avoided by extending the guard interval of the DMRS symbol.

In addition, the start location of the first subset may be flexibly set by a network device based on an actual requirement. Therefore, a guard interval between symbols can be flexibly configured.

With reference to the third aspect, in some implementations of the third aspect, that the transmitting end performs signal processing on the first set includes: mapping a first sequence to the second set. The first sequence is used to replace a part of complex-valued symbols in the second transmit symbol. An end location for mapping the first sequence is an end location of the second transmit symbol.

In this application, the first sequence is located between the first transmit symbol and the second transmit symbol. The first sequence helps avoid a problem that waveforms are inconsecutive at a concatenated portion between the first transmit symbol and the second transmit symbol, to enhance consecutiveness between the first transmit symbol and the second transmit symbol.

With reference to the third aspect, in some implementations of the third aspect, that the transmitting end performs signal processing on the second set further includes: The transmitting end truncates the second transmit symbol. A truncation location is in the first sequence.

In this application, a part of signals in the first sequence are truncated, to help avoid an increase in a total length of a symbol caused by a fact that the length of the cyclic prefix of the first transmit symbol is greater than the length of the cyclic prefix that corresponds to the subcarrier spacing of the first transmit symbol.

For another implementation of the third aspect, refer to the foregoing descriptions of the first aspect. Details are not described herein again.

According to a fourth aspect, a symbol processing method is provided. The method includes: A transmitting end generates a first transmit symbol and a second transmit symbol. The first transmit symbol includes a cyclic suffix. The cyclic suffix is used to extend a guard interval between the first transmit symbol and the second transmit symbol, so that a start location of the guard interval is a first reference point, and an end location of the guard interval is an end location of the cyclic suffix of the first transmit symbol. The first reference point is a location for intercepting the cyclic prefix in the first transmit symbol. The transmitting end sends the first transmit symbol and the second transmit symbol.

The first transmit symbol and the second transmit symbol are consecutive in time domain. The first transmit symbol is located before the second transmit symbol in time domain. The first transmit symbol is a symbol that carries a reference signal, and the second transmit symbol is a symbol that carries a data signal.

In this application, the start location of the guard interval between the first transmit symbol and the second transmit symbol is the location for intercepting the cyclic prefix in the first transmit symbol, and the end location is the end location of the cyclic suffix of the first transmit symbol. Therefore, it may be understood that a length of the guard interval is greater than a length of the cyclic prefix of the first transmit symbol. In this way, the guard interval of the first transmit symbol is extended, and this helps eliminate multipath effect of the channel. When the first transmit symbol is a DMRS symbol, performance deterioration of DMRS based channel estimation can be avoided by extending a guard interval of the DMRS symbol.

With reference to the fourth aspect, in some implementations of the fourth aspect, the cyclic suffix of the first transmit symbol is the same as a fourth subset of the first transmit symbol, and a start location of the fourth subset is a start location of the first transmit symbol.

It should be understood that a start location of a transmit symbol is a start location of the transmit symbol, rather than a start location of a cyclic prefix of the transmit symbol. Alternatively, from another perspective, it may be understood that the start location of the transmit symbol is an end location of the cyclic prefix of the transmit symbol.

In addition, in this application, an end location of the fourth subset may be flexibly set by a network device based on an actual requirement. Therefore, a guard interval between symbols can be flexibly configured.

With reference to the fourth aspect, in some implementations of the fourth aspect, that a transmitting end generates a second transmit symbol includes: The transmitting end maps a second sequence to the second transmit symbol. The second sequence is used to replace a part of complex-valued symbols in the second transmit symbol. A start location for mapping the second sequence is a header of the second transmit symbol.

That "the start location for mapping the second sequence is the header of the second transmit symbol" may be understood as follows: When the second transmit symbol includes a cyclic prefix, the start location for mapping the second sequence is a start location of the CP of the second transmit symbol. When the second transmit symbol does not include a cyclic prefix, the start location for mapping the second sequence is a start location of the second transmit symbol.

In this application, the second sequence is a segment of special sequence. The second sequence is mapped to the header of the second transmit symbol. This helps avoid a problem that waveforms are inconsecutive at a concatenated portion after the first transmit symbol and the second transmit symbol are directly concatenated, to enhance consecutiveness between the first transmit symbol and the second transmit symbol.

With reference to the fourth aspect, in some implementations of the fourth aspect, a length of the fourth subset is less than a length of the second sequence.

With reference to the fourth aspect, in some implementations of the fourth aspect, the second sequence is an all-zero sequence; or the second sequence is the same as a fifth subset of the first transmit symbol; a start location of the fifth subset is the start location of the first transmit symbol or before the start location of the first transmit symbol; and an end location of the fifth subset is after the end location of the fourth subset.

In this application, the second sequence is located between the first transmit symbol and the second transmit symbol.

When the second sequence is the all-zero sequence, there is a segment of invalid information between the first transmit symbol and the second transmit symbol. Therefore, the problem that the waveforms are inconsecutive at the concatenated portion between the first transmit symbol and the second transmit symbol is avoided to some extent, to enhance the consecutiveness between the first transmit symbol and the second transmit symbol.

When the second sequence is the same as a part of complex-valued symbols in the second transmit symbol, the waveforms are made consecutive at the concatenated portion between the first transmit symbol and the second transmit symbol. Therefore, this avoids the problem that the waveforms are inconsecutive at a symbol concatenated portion after the first transmit symbol and the second transmit symbol are combined into consecutive signals, to enhance the consecutiveness between the first transmit symbol and the second transmit symbol.

With reference to the fourth aspect, in some implementations of the fourth aspect, that a transmitting end generates a second transmit symbol further includes: The transmitting end truncates the second transmit symbol. A truncation location is in the second sequence.

In this application, a part of signals in the second sequence are truncated, to help avoid an increase in a total length of a symbol caused by cyclic suffix addition to the first transmit symbol.

With reference to the fourth aspect, in some implementations of the fourth aspect, when the second sequence is the all-zero sequence, a truncation length is the length of the fourth subset. Alternatively, when the second sequence is the same as the fifth subset of the first transmit symbol, a truncation part is a same symbol part between a tail of the first transmit symbol and the header of the second transmit symbol.

When the second sequence is the same as the fifth subset of the first transmit symbol, the same symbol part between the tail of the first transmit symbol and the header of the second transmit symbol is truncated from the second transmit symbol, so that the waveforms can be made consecutive at the symbol concatenated portion after the first transmit symbol and the second transmit symbol are combined into the consecutive signals, to enhance the consecutiveness between the first transmit symbol and the second transmit symbol.

With reference to the fourth aspect, in some implementations of the fourth aspect, the method further includes: The transmitting end combines the generated first transmit symbol and second transmit symbol into the consecutive signals.

With reference to the fourth aspect, in some implementations of the fourth aspect, the second sequence is the same as the fifth subset of the second transmit symbol, and the method further includes: The transmitting end performs cyclic shift on at least one of the following: performing the cyclic shift on the second transmit symbol and the first transmit symbol, to obtain the same symbol part between the header of the second transmit symbol and the tail of the first transmit symbol.

In this application, through the cyclic shift, the same symbol part between the header of the second transmit symbol and the tail of the first transmit symbol can be obtained. Further, after a truncation operation, the waveforms are made consecutive at the symbol concatenated portion after the first transmit symbol and the second transmit symbol are combined into the consecutive signals.

With reference to the fourth aspect, in some implementations of the fourth aspect, after that the transmitting end truncates the second transmit symbol, the method further includes: The transmitting end sends a second message. The second message includes information about a remaining part of the second sequence after the second transmit symbol is truncated.

In this application, the second message includes the information about the remaining part of the second sequence. Therefore, a receiving end can decode, based on the second message, a part that is of the second transmit symbol and that is other than the second sequence, to obtain required data.

According to a fifth aspect, a symbol processing apparatus is provided. The apparatus includes: a processing unit, configured to generate a first transmit symbol and a second transmit symbol, where a length of a cyclic prefix of the first transmit symbol is greater than a length of a cyclic prefix that corresponds to a subcarrier spacing of the first transmit symbol; and a transceiver unit, configured to send the first transmit symbol and the second transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal.

With reference to the fifth aspect, in some implementations of the fifth aspect, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

With reference to the fifth aspect, in some implementations of the fifth aspect, the processing unit is configured to map a first sequence to the second transmit symbol. The first sequence is used to replace a part of complex-valued symbols in the second transmit symbol. An end location for mapping the first sequence is an end location of the second transmit symbol.

With reference to the fifth aspect, in some implementations of the fifth aspect, a difference between the length of the cyclic prefix of the first transmit symbol and the length of the cyclic prefix that corresponds to the subcarrier spacing of the first transmit symbol is less than a length of the first sequence.

With reference to the fifth aspect, in some implementations of the fifth aspect, the first sequence is an all-zero sequence; or the first sequence is the same as a second subset of the first transmit symbol; a start location of the second subset is before the start location of the first subset; and an end location of the second subset is the first reference point or after the first reference point.

With reference to the fifth aspect, in some implementations of the fifth aspect, the processing unit is further configured to truncate the second transmit symbol. A truncation location is in the first sequence.

With reference to the fifth aspect, in some implementations of the fifth aspect, when the first sequence is the all-zero sequence, a truncation length is the difference between the length of the cyclic prefix of the first transmit symbol and the length of the cyclic prefix that corresponds to the subcarrier spacing of the first transmit symbol. Alternatively, when the first sequence is the same as the second subset of the first transmit symbol, a truncation part is a same symbol part between a header of the first transmit symbol and a tail of the second transmit symbol.

With reference to the fifth aspect, in some implementations of the fifth aspect, the processing unit is further configured to combine the generated first transmit symbol and second transmit symbol into consecutive signals.

With reference to the fifth aspect, in some implementations of the fifth aspect, the first sequence is the same as the second subset of the first transmit symbol, and the processing unit is further configured to perform cyclic shift on at least one of the following: the second transmit symbol and the first transmit symbol, to obtain the same symbol part between the tail of the second transmit symbol and the header of the first transmit symbol.

With reference to the fifth aspect, in some implementations of the fifth aspect, after the second transmit symbol is truncated, the transceiver unit is further configured to send a first message. The first message includes information about a remaining part of the first sequence after the second transmit symbol is truncated.

According to a sixth aspect, a symbol processing apparatus is provided. The apparatus includes: a transceiver unit, configured to obtain a first transmit symbol and a second transmit symbol, where a length of a cyclic prefix of the first transmit symbol is greater than a length of a cyclic prefix that corresponds to a subcarrier spacing of the first transmit symbol; the first transmit symbol and the second transmit symbol are consecutive in time domain, and the first transmit symbol is located after the second transmit symbol in time domain; and the first transmit symbol is a symbol that carries a reference signal, and the second transmit symbol is a symbol that carries a data signal; and a processing unit, configured to perform signal processing on the first transmit symbol and the second transmit symbol.

With reference to the sixth aspect, in some implementations of the sixth aspect, the processing unit is further configured to perform a cyclic prefix removal operation on the first transmit symbol and the second transmit symbol. Cyclic prefixes are cyclic prefixes that correspond to subcarrier spacings of the first transmit symbol and the second transmit symbol.

With reference to the sixth aspect, in some implementations of the sixth aspect, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

With reference to the sixth aspect, in some implementations of the sixth aspect, the second transmit symbol includes a first sequence, and an end location of the first sequence is an end location of the second transmit symbol. The first sequence is an all-zero sequence; or the first sequence is the same as a third subset of the first transmit symbol, and an end location of the third subset is a location for intercepting the cyclic prefix in the first transmit symbol.

With reference to the sixth aspect, in some implementations of the sixth aspect, the transceiver unit is further configured to obtain a first message. The first message includes information about the first sequence.

With reference to the sixth aspect, in some implementations of the sixth aspect, the processing unit is further configured to decode, based on the information about the first sequence, a part that is of the second transmit symbol and that is other than the first sequence, to obtain data.

According to a seventh aspect, a symbol processing apparatus is provided. The apparatus is configured to perform the method according to the third aspect or the fourth aspect.

Optionally, the apparatus may include a module configured to perform the method according to the third aspect or the fourth aspect.

According to an eighth aspect, a symbol processing apparatus is provided. The apparatus includes at least one processor, configured to execute a computer program or instructions stored in a memory, to perform the method according to any one of the first aspect to the fourth aspect. Optionally, the communication apparatus further includes the memory that is configured to store the program.

According to a ninth aspect, a computer-readable storage medium is provided. The computer-readable medium is configured to store program code to be executed by a device. The program code includes the method according to any one of the first aspect to the fourth aspect.

According to a tenth aspect, a computer program product is provided. When the computer program product runs on a computer, the computer is enabled to perform the method according to any one of the first aspect to the fourth aspect.

According to an eleventh aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a chip is provided. The chip includes a processor and a communication interface. The processor reads, through the communication interface, instructions stored in a memory, and performs the method according to any one of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the first aspect to the fourth aspect.

According to a thirteenth aspect, a chip is provided. The chip includes a logic circuit and a communication interface. The communication interface is configured to input to-be-processed data and/or information, and transmit the to-be-processed data and/or information to the logic circuit. The logic circuit is configured to perform encoding processing according to any implementation of any one of the first aspect to the fourth aspect. In addition, the communication interface is further configured to output an encoded polar codeword.

## BRIEF DESCRIPTION OF DRAWINGS

FIG. 1 and FIG. 2 are diagrams in which a cyclic prefix (CP) is used as a guard interval between symbols;
FIG. 3 is a diagram of an example of a DMRS using a larger subcarrier spacing (SCS);
FIG. 4 is a schematic flowchart of a symbol processing method according to an embodiment of this application;
FIG. 5 is a diagram of a time domain structure of transmit symbols according to an embodiment of this application;
FIG. 6, FIG. 7, and FIG. 8 are basic flowcharts of a symbol processing method according to an embodiment of this application;
FIG. 9 is a schematic flowchart of a symbol processing method according to an embodiment of this application;
FIG. 10 is a diagram in which signal processing is performed on a first transmit symbol according to an embodiment of this application;
FIG. 11 is a diagram in which signal processing is performed on a second transmit symbol according to an embodiment of this application;
FIG. 12 is a diagram in which cyclic shift is performed on a first transmit symbol according to an embodiment of this application;
FIG. 13 is a diagram in which cyclic shift is performed on a second transmit symbol according to an embodiment of this application;
FIG. 14 is a diagram in which a first transmit symbol and a second transmit symbol are combined into consecutive signals according to an embodiment of this application;
FIG. 15 is another diagram of a time domain structure of transmit symbols according to an embodiment of this application;
FIG. 16 is a schematic flowchart of another symbol processing method according to an embodiment of this application;
FIG. 17 is another diagram in which signal processing is performed on a first transmit symbol according to an embodiment of this application;
FIG. 18 is another diagram in which signal processing is performed on a second transmit symbol according to an embodiment of this application;
FIG. 19 is a schematic block diagram of a symbol processing apparatus according to an embodiment of this application;
FIG. 20 is another schematic block diagram of a symbol processing apparatus according to an embodiment of this application;
FIG. 21 is a schematic block diagram of a terminal device according to an embodiment of this application; and
FIG. 22 is a schematic block diagram of a network device according to an embodiment of this application.

## DESCRIPTION OF EMBODIMENTS

The following describes technical solutions of embodiments in this application with reference to the accompanying drawings.

Unless otherwise defined, all technical and scientific terms used in this specification have same meanings as those usually understood by a person skilled in the art of this application. Terms used in this specification of this application are merely intended to describe specific embodiments, but are not intended to limit this application.

Compared with a multicarrier waveform such as orthogonal frequency division multiplexing (orthogonal frequency division multiplexing, OFDM), a single-carrier waveform such as discrete fourier transform-spread-orthogonal frequency division multiplexing (discrete fourier transform-spread-orthogonal frequency division multiplexing, DFT-s-OFDM) or single-carrier quadrature amplitude modulation (Single-carrier quadrature amplitude modulation, SC-QAM) has a lower peak to average power ratio (peak to average power ratio, PAPR). Therefore, with a same power amplifier, the single-carrier waveform may provide larger output power and higher power amplification efficiency. Therefore, coverage is improved and power consumption is reduced. Therefore, the single-carrier waveform such as the DFT-s-OFDM or the SC-QAM is widely applied to various communication systems, for example, a long term evolution (long term evolution, LTE) system, a 5G system, or an NR system.

The DFT-s-OFDM is the discrete fourier transform-spread-orthogonal frequency division multiplexing (discrete fourier transform-spread-orthogonal frequency division multiplexing, DFT-s-OFDM). The SC-QAM is the single-carrier quadrature amplitude modulation (Single-carrier quadrature amplitude modulation, SC-QAM).

In both NR and LTE, a cyclic prefix (cyclic prefix, CP) is used as a guard interval between symbols (DFT-s-OFDM symbols) in a DFT-s-OFDM waveform.

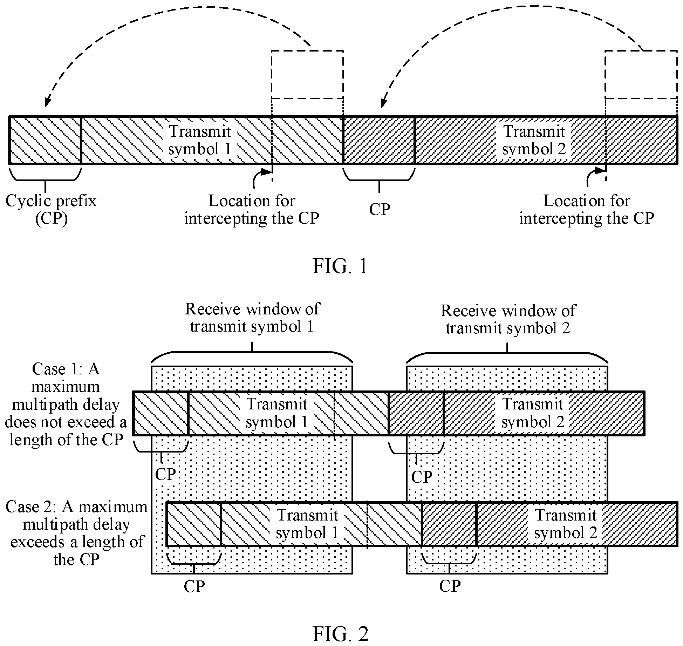

FIG. 1 is a diagram of a time domain structure in which a cyclic prefix (denoted as a CP below) is used as a guard interval between symbols.

In FIG. 1, two transmit symbols: transmit symbol 1 and transmit symbol 2 are provided. A CP of transmit symbol 1 refers to a cyclic structure formed by copying, to a location before transmit symbol 1, a segment of transmit symbol component between a location for intercepting the CP in transmit symbol 1 and an end location of transmit symbol 1. Similarly, a CP of transmit symbol 2 refers to a cyclic structure formed by copying, to a location before transmit symbol 2, a segment of transmit symbol component between a location for intercepting the CP in transmit symbol 2 and an end location.

The CP of transmit symbol 2 is used as a guard interval between transmit symbol 1 and transmit symbol 2, and the CP of transmit symbol 1 is used as a guard interval between transmit symbol 1 and a transmit symbol (not shown in FIG. 1) before transmit symbol 1.

FIG. 2 shows reception of transmit symbol 1 and transmit symbol 2 shown in FIG. 1 at a receiving end after transmit symbol 1 and transmit symbol 2 are transmitted through a channel (where in an example, FIG. 2 only shows a maximum multipath delay of the channel).

Case 1 represents that the maximum multipath delay of the channel does not exceed a length of the CP. In Case 1, because of protection of the CP, a receive window of each transmit symbol does not include inter-symbol interference (inter-symbol interference, ISI) of another transmit symbol. As shown in FIG. 2, a receive window of transmit symbol 2 does not include transmit symbol 1, so that ISI of transmit symbol 1 can be avoided. A receive window of transmit symbol 1 does not include the transmit symbol (not shown in FIG. 2) before transmit symbol 1, so that transmit symbol 1 is not subject to ISI either. In addition, in Case 1, in the receive window of each transmit symbol, a received symbol is a cyclic convolution of the transmit symbol and the channel, so that the receiving end can eliminate a multipath effect of the channel by using a frequency domain equalization method.

Case 2 represents that the maximum multipath delay of the channel exceeds a length of the CP. In Case 2, because the delay of the channel exceeds the length of the CP, a receive window of one transmit symbol includes another transmit symbol. As shown in FIG. 2, a receive window of transmit symbol 2 includes a segment of transmit symbol component of transmit symbol 1, so that transmit symbol 2 is subject to ISI of transmit symbol 1. Similarly, a receive window of transmit symbol 1 may also include the transmit symbol (not shown in FIG. 2) before transmit symbol 1, so that transmit symbol 1 is also subject to ISI. In addition, in Case 2, in the receive window of each transmit symbol, a received symbol is no longer a cyclic convolution of the transmit symbol and the channel. This is unfavorable for the receiving end to eliminate a multipath effect of the channel.

It should be noted that all lengths mentioned in this specification, for example, the length of the CP, a length of a sequence, and a length of a symbol component, refer to time lengths. For example, a unit of the length (namely, the time length) mentioned in this specification is $T_c = 1/(4096 \cdot 480 \cdot 10^3)$ second. For another example, the time length may alternatively be represented by a quantity of time domain sampling points.

For a DMRS signal, to improve channel estimation performance, a DMRS with a larger subcarrier spacing needs to be used, to improve a capability of the DMRS to resist Doppler effect.

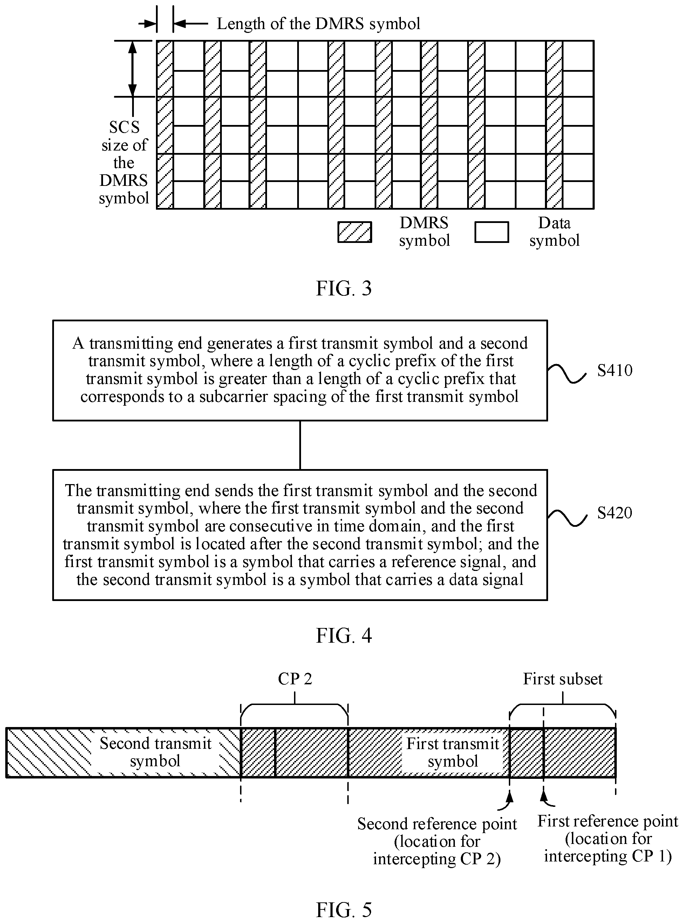

FIG. 3 is a diagram of an example of a DMRS using a larger subcarrier spacing (SCS). The subcarrier spacing of the DMRS is twice a length of a subcarrier spacing of a data symbol. In this case, a symbol length of the DMRS is half of a length of the data symbol. Therefore, in this case, a length of a CP of the DMRS symbol is also half a length of a CP of the data symbol. When a maximum multipath delay is greater than the CP of the DMRS symbol and less than the CP of the data symbol, performance of DMRS based channel estimation deteriorates.

This application provides a symbol processing method and apparatus, to extend a guard interval of a DMRS symbol without affecting a subcarrier spacing of the DMRS symbol.

The communication method provided in embodiments of this application may be applied to various communication systems, for example, a satellite communication system, an internet of things (internet of things, IoT) system, a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, a fifth generation (5G) communication system such as a 5G new radio (new radio, NR) system, three main application scenarios of a 5G mobile communication system, namely, enhanced mobile broadband (enhanced mobile broadband, eMBB), ultra-reliable and low latency communications (ultra-reliable and low latency communications, uRLLC), and massive machine type communications (massive machine type communications, mMTC), a device-to-device (device-to-device, D2D) communication system, a machine to machine (machine to machine, M2M) communication system, and a vehicle-to-everything communication system, or may be applied to another or future communication system. This is not specifically limited in embodiments of this application.

FIG. 4 is a schematic flowchart of a symbol processing method according to an embodiment of this application. As shown in FIG. 4, the method 400 includes steps S410 and S420.

S410: A transmitting end generates a first transmit symbol and a second transmit symbol.

A length of a CP of the first transmit symbol is greater than a length of a CP that corresponds to an SCS of the first transmit symbol.

In an example, a diagram of a time domain structure of the generated first transmit symbol and second transmit symbol is shown in FIG. 5. A first reference point represents a location for intercepting the CP that corresponds to the SCS in the first transmit symbol, and a second reference point represents a location for intercepting the CP in the first transmit symbol.

In the following embodiments, for brevity, "CP 2" represents "the CP of the first transmit symbol", and "CP 1" represents "the CP that corresponds to the SCS of the first transmit symbol". In other words, when differences between the terms are not emphasized, the following "CP 2" represents "the CP of the first transmit symbol", and the following "CP 1" represents "the CP that corresponds to the SCS of the first transmit symbol". In the foregoing descriptions, "the location for intercepting the CP that corresponds to the SCS in the first transmit symbol" is "a location for intercepting CP 1 in the first transmit symbol", and in the foregoing descriptions, "the location for intercepting the CP in the first transmit symbol" is "a location for intercepting CP 2 in the first transmit symbol".

In NR, a subcarrier spacing of NR may be $2^{\mu} \cdot 15$ kHz. In an example, a value of $\mu$, the subcarrier spacing, and a cyclic prefix have a relationship shown in Table 1.

**Table 1**

| $\mu$ | Subcarrier spacing (unit: kHz) | Cyclic prefix |
|---|---|---|
| 0 | 15 | Normal |
| 1 | 30 | Normal |
| 2 | 60 | Normal |
| 3 | 120 | Normal, Extended |
| 4 | 240 | Normal |

A length of a CP of a transmit symbol is denoted as $N_{CP,l}^{\mu}$, where $l$ represents an index number of a complex-valued symbol in a subframe. In an example, the length of the CP (namely, CP 1) that corresponds to the SCS of the first transmit symbol may be expressed as follows:

$$N_{CP,l}^{\mu} = \begin{cases} 512k \cdot 2^{-\mu} & \text{extended CP} \\ 144 \cdot 2^{-\mu} + 16k & \text{normal CP}, l = 0 \text{ or } l = 7 \cdot 2^{\mu} \\ 144 \cdot 2^{-\mu} & \text{normal CP}, l \neq 0 \text{ and } l \neq 7 \cdot 2^{\mu} \end{cases}$$

In other words, when the SCS of the first transmit symbol and a type of CP 1 of the first transmit symbol are determined, the length of CP 1 is also determined, that is, the location for intercepting CP 1 is determined.

In S410, the length of the cyclic prefix of the first transmit symbol is greater than the length of the cyclic prefix that corresponds to the subcarrier spacing of the first transmit symbol. That is, the length of CP 2 is greater than the length of CP 1. In this way, a guard interval of the first transmit symbol is extended, and this helps eliminate multipath effect of a channel. When the first transmit symbol is a DMRS symbol, performance deterioration of DMRS based channel estimation can be avoided by extending a guard interval of the DMRS symbol. In addition, the location for intercepting CP 2 may be flexibly set by a network device based on an actual requirement. Therefore, a guard interval between symbols can be flexibly configured.

The following describes a specific procedure of generating the first transmit symbol and the second transmit symbol shown in FIG. 5.

S420: The transmitting end sends the first transmit symbol and the second transmit symbol. Correspondingly, a receiving end obtains the first transmit symbol and the second transmit symbol, and performs signal processing on the obtained first transmit symbol and second transmit symbol.

The first transmit symbol and the second transmit symbol are consecutive in time domain. The first transmit symbol is located after the second transmit symbol. The first transmit symbol is a symbol that carries a reference signal, and the second transmit symbol is a symbol that carries a data signal. In this application, the first transmit symbol may be, for example, a DMRS symbol.

It should be understood that all location relationships between the first transmit symbol and the second transmit symbol mentioned in this application represent location relationships between the first transmit symbol and the second transmit symbol in time domain. For example, that the first transmit symbol is located after the second transmit symbol represents that the first transmit symbol is located after the second transmit symbol in time domain.

Optionally, the cyclic prefix of the first transmit symbol is the same as a first subset of the first transmit symbol.

FIG. 5 is used as an example. In FIG. 5, CP 2 is the same as the first subset of the first transmit symbol. A start location of the first subset is the second reference point, and the second reference point is before the first reference point. An end location of the first subset is an end location of the first transmit symbol.

It should be understood that, that CP 2 is the same as the first subset includes: CP 2 is the same as content included in the first subset, and a time length of CP 2 is the same as a time length of the first subset.

It should be noted that, in the foregoing descriptions with reference to FIG. 5, that "CP 2 is the same as the first subset" is mentioned. The word "same" herein does not necessarily mean "being the same in an absolute sense", but may mean "being approximately the same". It should be understood that, due to filter smearing effect, there may be a slight deviation between CP 2 and the first subset.

Optionally, there is a segment of special sequence (denoted as a first sequence, which is not shown in FIG. 5) in the second transmit symbol. An end location of the special sequence is an end location of the second transmit symbol. The special sequence may be an all-zero sequence, or the special sequence may be the same as a third subset (not shown in FIG. 5) of the first transmit symbol. An end location of the third subset is the second reference point. In other words, a complex-valued symbol in the first sequence is the same as a segment of transmit symbol component that has a same length and that is before the second reference point. The existence of the first sequence helps avoid a problem that waveforms are inconsecutive at a concatenated portion after the first transmit symbol and the second transmit symbol are directly concatenated, to enhance consecutiveness between the first transmit symbol and the second transmit symbol.

In this application, the length of the cyclic prefix of the first transmit symbol is greater than the length of the cyclic prefix that corresponds to the subcarrier spacing of the first transmit symbol. In this way, the guard interval of the first transmit symbol is extended, and this helps eliminate the multipath effect of the channel. When the first transmit symbol is the DMRS symbol, the performance deterioration of the DMRS based channel estimation can be avoided by extending the guard interval of the DMRS symbol. In addition, a location of the second reference point (the location for intercepting CP 2) may be flexibly set by the network device based on the actual requirement. Therefore, the guard interval between the symbols can be flexibly configured.

The following describes a specific procedure in S420 in which the receiving end performs signal processing on the obtained first transmit symbol and second transmit symbol.

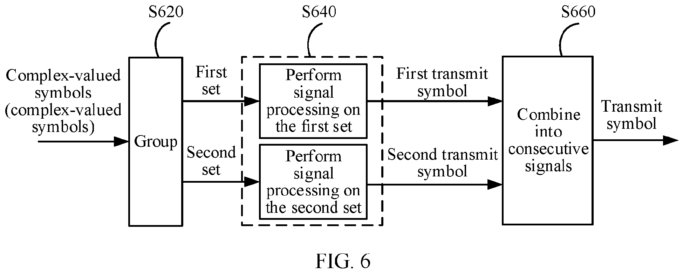

The following describes, with reference to FIG. 6 to FIG. 9, the specific procedure of generating the first transmit symbol and the second transmit symbol shown in FIG. 5.

FIG. 6 is a diagram of a basic procedure of a symbol processing method according to an embodiment of this application. As shown in FIG. 6, the method 600 includes the following steps S620, S640, and S660.

S620: A transmitting end groups a plurality of complex-valued symbols (complex-valued symbols) to obtain a plurality of sets (sets). Each set corresponds to one transmit symbol. In other words, the plurality of complex-valued symbols are divided into (are divided into) the plurality of sets, and each set corresponds to one transmit symbol.

It may be understood that, in this application, an operation performed on a transmit symbol is an operation performed on a set that constitutes the transmit symbol, or an operation performed on a complex-valued symbol in a set that constitutes the transmit symbol.

The plurality of complex-valued symbols may include a modulated symbol obtained by modulating an encoded bit stream.

A modulation scheme for modulating the encoded bit stream may include pi/2-binary phase shift keying (binary phase shift keying, BPSK), quadrature phase shift keying (quadrature phase shift keying, QPSK), 16 quadrature amplitude modulation (quadrature amplitude modulation, QAM), 64 QAM, 256 QAM, phase shift keying (phase shift keying, PSK), amplitude phase shift keying (amplitude phase shift keying, APSK), non-uniform QAM, or the like.

Optionally, the plurality of complex-valued symbols may further include a reference signal sampling point. For example, the reference signal sampling point may include a phase tracking reference signal (phase tracking reference signal, PTRS) sampling point.

That each set corresponds to one transmit symbol means that each finally generated transmit symbol is generated based on one corresponding set. For example, each set corresponds to one DFT-s-OFDM symbol or SC-QAM symbol.

Each set may include several complex-valued symbols. For example, each set may be considered as one multidimensional time domain vector, and the complex-valued symbols in the set may be considered as elements in the time domain vector.

In this embodiment of this application, the plurality of sets include a first set that corresponds to a first transmit symbol and a second set that corresponds to a second transmit symbol. The first transmit symbol is a symbol that carries a reference signal, and the second transmit symbol is a symbol that carries a data signal. The symbol that carries the reference signal may also be referred to as a reference signal symbol, and the symbol that carries the data signal may also be referred to as a data symbol.

S640: The transmitting end separately performs signal processing on the first set and the second set that are obtained in step S620, to generate a final first transmit symbol and a final second transmit symbol.

A process of performing signal processing on the first set and the second set includes cyclic prefix addition, so that a length of a cyclic prefix of the first transmit symbol is greater than a length of a cyclic prefix that corresponds to a subcarrier spacing of the first transmit symbol.

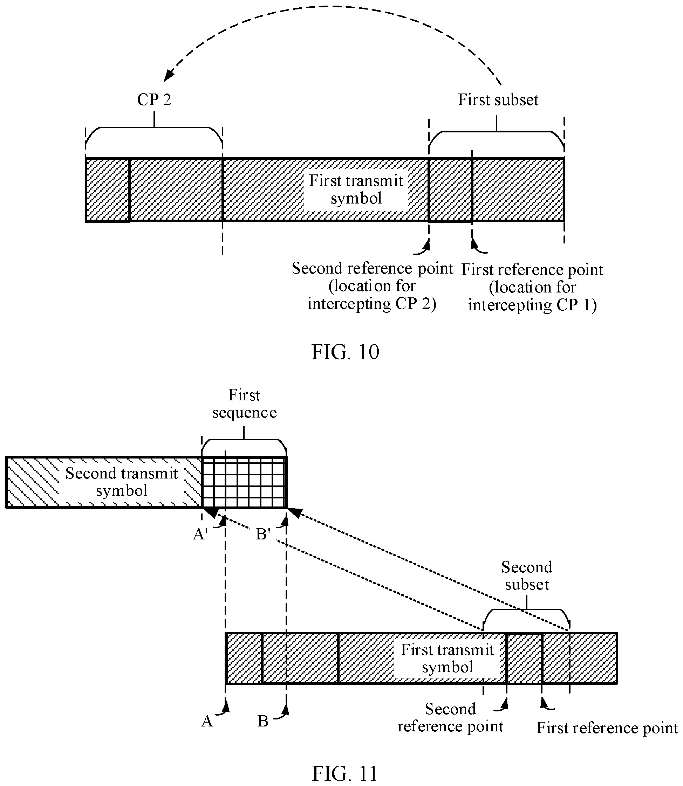

Optionally, a process of performing signal processing on the second set includes a mapping operation. The mapping operation includes mapping a first sequence to the second transmit symbol. The first sequence may be used to replace a part of complex-valued symbols in the second transmit symbol. The first sequence may be an all-zero sequence, or may be the same as a second subset of the first transmit symbol (as shown in FIG. 11), to avoid a problem that waveforms are inconsecutive at a concatenated portion after the first transmit symbol and the second transmit symbol are directly concatenated, to enhance consecutiveness between the first transmit symbol and the second transmit symbol.

Optionally, the process of performing signal processing on the second set further includes a truncation operation.

Optionally, the process of performing signal processing on the first set and/or the second set further includes cyclic shift.

Optionally, the process of performing signal processing on the first set and the second set further includes another operation. The another operation herein includes but is not limited to fast fourier transform, carrier mapping, sampling, filtering, or the like.

The following describes a specific procedure in which signal processing is separately performed on the first set and the second set.

S660: The transmitting end combines the first transmit symbol and the second transmit symbol obtained through the signal processing into consecutive signals.

The length of the cyclic prefix of the first transmit symbol obtained through the signal processing is greater than the length of the cyclic prefix that corresponds to the subcarrier spacing of the first transmit symbol, to help eliminate multipath effect of a channel. When the first transmit symbol is a DMRS symbol, performance deterioration of DMRS based channel estimation can be avoided by extending a guard interval of the DMRS symbol.

For ease of distinguishing but not limitation, the following agreement on names of signals is made in this specification: Signals to be grouped (or divided) into a set are referred to as complex-valued symbols. A signal obtained by grouping (or dividing) the complex-valued symbols is referred to as a set. A set including a part of complex-valued symbols in the set is referred to as a subset. A signal sent by the transmitting end is referred to as a transmit symbol.

It should be understood that these names are merely for ease of understanding and distinguishing but not limitation. For example, in a future technology evolution process, signals obtained at different phases of a symbol generation procedure may have other names.

The transmit symbol in this embodiment of this application may be a symbol of a single-carrier waveform. For example, the transmit symbol is a DFT-s-OFDM symbol. The DFT-s-OFDM symbol represents a single-carrier symbol whose waveform is a DFT-s-OFDM waveform. For another example, the transmit symbol is an SC-QAM symbol. The SC-QAM symbol represents a single-carrier symbol whose waveform is an SC-QAM waveform.

In the following descriptions, a wireless communication system to which the DFT-s-OFDM waveform is applicable in this application is denoted as application scenario 1, and a wireless communication system to which the SC-QAM waveform is applicable in this application is denoted as application scenario 2.

Optionally, an application scenario of this application is application scenario 1. To be specific, the transmit symbol is a DFT-s-OFDM symbol.

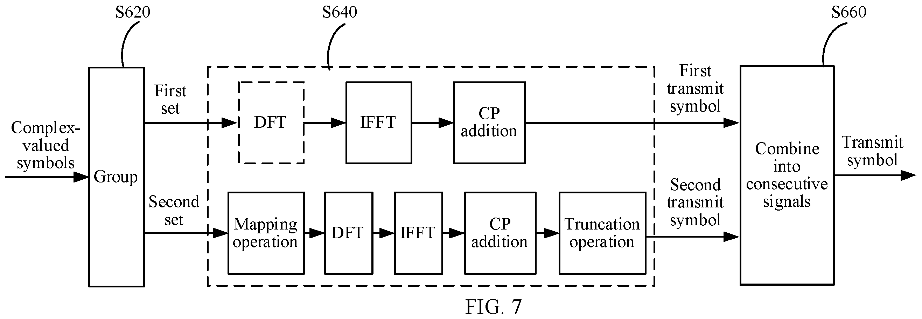

As shown in FIG. 7, in step S640, the process in which the transmitting end performs signal processing on the first set includes the CP addition, and further includes an inverse fast fourier transform (inverse fast fourier transform, IFFT) operation.

For example, in step S640, the transmitting end maps M-point frequency domain elements in the first set to M consecutive subcarriers (not shown in FIG. 7), performs IFFT transform on a frequency domain signal after the subcarrier mapping, and performs CP addition on a signal obtained through the IFFT, to finally obtain the first transmit symbol. If the first set is a time domain signal, the process of performing signal processing on the first set further includes a discrete fourier transform (discrete fourier transform, DFT) operation. DFT may also be referred to as frequency domain precoding.

For example, if the first set is a time domain signal, in step S640, the transmitting end first performs M-point DFT transform on the first set, maps M-point frequency domain elements obtained through the DFT transform to M consecutive subcarriers (not shown in FIG. 7), performs IFFT transform on a frequency domain signal after the subcarrier mapping, and performs CP addition on a signal obtained through the IFFT, to finally obtain the first transmit symbol.

In step S640, the process in which the transmitting end performs the signal processing on the second set includes the mapping operation, the CP addition operation, and the truncation operation, and further includes a discrete fourier transform operation (discrete fourier transform, DFT) and an inverse fast fourier transform (inverse fast fourier transform, IFFT) operation.

For example, in step S640, the transmitting end performs M-point DFT transform on the second set obtained through the mapping operation, maps M-point frequency domain elements obtained through the DFT transform to M consecutive subcarriers (not shown in FIG. 7), performs IFFT transform on a frequency domain signal after the subcarrier mapping, and performs CP addition on a signal obtained through the IFFT and truncates a part of the signal, to finally obtain the second transmit symbol.

Optionally, step S640 further includes a frequency domain spectrum shaping (frequency domain spectrum shaping, FDSS) operation.

For example, in step S640, the transmitting end performs a cyclic extension and frequency domain filtering operation (namely, the FDSS operation) on the M-point frequency domain elements obtained through the DFT transform, maps frequency domain elements obtained through the FDSS operation to M1 (M1≥M) consecutive subcarriers, and performs IFFT transform on a frequency domain signal after the subcarrier mapping.

It should be understood that, in application scenario 1, the mapping operation is performed on the second set before the DFT.

Optionally, an application scenario of this application is application scenario 2. To be specific, the transmit symbol is an SC-QAM symbol.

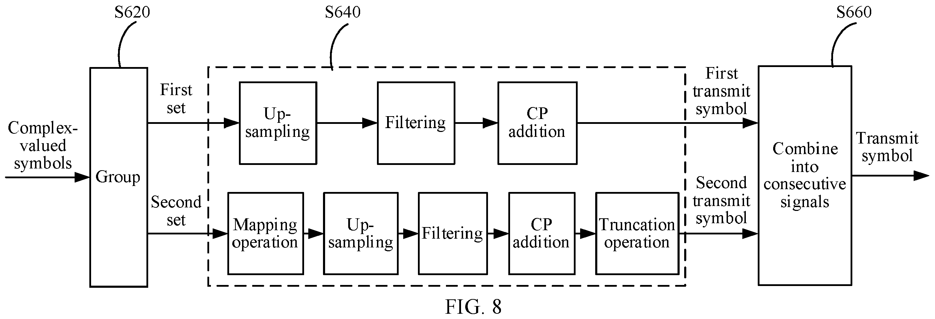

As shown in FIG. 8, in step S640, the process in which the transmitting end performs signal processing on the first set includes the CP addition operation, and further includes up-sampling and filtering.

For example, in step S640, the transmitting end performs up-sampling and filtering on the first set, and performs CP addition on a signal obtained through the filtering, to finally obtain the first transmit symbol.

In step S640, the process in which the transmitting end performs signal processing on the second set includes the mapping operation, the CP addition operation, and the truncation operation, and further includes up-sampling and filtering.

For example, in step S640, the transmitting end performs up-sampling and filtering on a second set obtained through the mapping operation, performs CP addition on a signal obtained through the filtering, and truncates a part of a signal, to finally obtain the second transmit symbol.

It should be understood that, in application scenario 2, the mapping operation performed on the second set is performed before the up-sampling.

Therefore, in this embodiment of this application, cyclic prefix addition is performed on the first transmit symbol, so that the length of the cyclic prefix of the first transmit symbol is greater than the length of the cyclic prefix that corresponds to the subcarrier spacing of the first transmit symbol. This helps eliminate the multipath effect of the channel. When the first transmit symbol is the DMRS symbol, the performance deterioration of the DMRS based channel estimation can be avoided by extending the guard interval of the DMRS symbol. In this embodiment of this application, the mapping operation is performed on the second set. In other words, the first sequence is mapped to the second transmit symbol, to help enhance the consecutiveness between the first transmit symbol and the second transmit symbol.

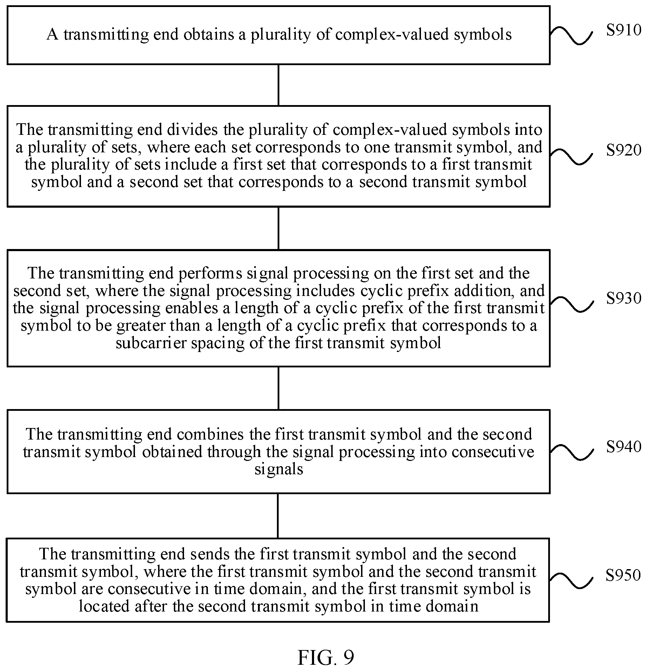

FIG. 9 is a schematic flowchart of a symbol processing method according to an embodiment of this application. The method 900 includes the following steps S910 to step S950.

S910: A transmitting end obtains a plurality of complex-valued symbols.

The plurality of complex-valued symbols may include a modulated symbol obtained by modulating an encoded bit stream.

Optionally, the plurality of complex-valued symbols may further include a reference signal sampling point. For example, the reference signal sampling point may include a PTRS sampling point.

S920: The transmitting end divides the plurality of complex-valued symbols into a plurality of sets.

Step S920 may correspond to step S620 shown in FIG. 6, FIG. 7, and FIG. 8.

Each set may include several complex-valued symbols. For example, each set may be considered as one multidimensional time domain vector, and the complex-valued symbols in the set may be considered as elements in the time domain vector.

Each set corresponds to one transmit symbol. For example, each set corresponds to one DFT-s-OFDM symbol or SC-QAM symbol.

The plurality of sets include a first set that corresponds to a first transmit symbol and a second set that corresponds to a second transmit symbol. The first transmit symbol and the second transmit symbol are consecutive in time domain. The first transmit symbol is located after the second transmit symbol.

S930: The transmitting end performs signal processing on the first set and the second set.

Step S930 may correspond to step S640 shown in FIG. 6, FIG. 7, and FIG. 8.

The following describes, with reference to FIG. 10, a process in which the transmitting end performs signal processing on the first set.

The process of performing signal processing on the first set includes cyclic prefix addition. The signal processing enables a length of a cyclic prefix (CP 2) of the first transmit symbol to be greater than a length of a cyclic prefix (CP 1) that corresponds to a subcarrier spacing of the first transmit symbol.

FIG. 10 is a diagram in which CP addition is performed on the first transmit symbol. CP addition performed on the first transmit symbol includes: performing a copy operation on a first subset of the first set, so that the first subset is used as the cyclic prefix (CP 2) of the first transmit symbol.

As shown in FIG. 10, a start location (denoted as a second reference point) of the first subset is before a first reference point of the first transmit symbol, and an end location of the first subset is an end location of the first transmit symbol. The first reference point is a location for intercepting the cyclic prefix that corresponds to the subcarrier spacing in the first transmit symbol.

Optionally, a location of the second reference point may be set by a network device.

Optionally, when the method 900 is applied to the foregoing scenario 1, before CP addition is performed on the first transmit symbol, the process of performing signal processing on the first set further includes IFFT transform. If the first set is a time domain signal, the process of performing signal processing on the first set further includes DFT transform.

Optionally, when the method 900 is applied to the foregoing scenario 2, before CP addition is performed on the first transmit symbol, the process of performing signal processing on the first set further includes up-sampling and filtering.

Signal processing is performed on the first set, so that the first transmit symbol that corresponds to the first set may be obtained.

In this embodiment, CP addition is performed on the first transmit symbol, so that the length of the cyclic prefix of the first transmit symbol is greater than the length of the cyclic prefix that corresponds to the subcarrier spacing of the first transmit symbol. This helps eliminate a multipath effect of a channel. When the first transmit symbol is a DMRS symbol, performance deterioration of DMRS based channel estimation can be avoided by extending a guard interval of the DMRS symbol. In addition, the location of the second reference point (a location for intercepting CP 2) may be flexibly set by the network device based on an actual requirement. Therefore, a guard interval between symbols can be flexibly configured.

The following describes, with reference to FIG. 11, a process in which the transmitting end performs signal processing on the second set.

Optionally, the process of performing signal processing on the second set includes a mapping operation. The mapping operation includes mapping a first sequence to the second transmit symbol. The first sequence is used to replace a part of complex-valued symbols in the second transmit symbol. An end location for mapping the first sequence is an end location of the second transmit symbol.

In an example, the first sequence may be an all-zero sequence. A quantity of zeros may be set by the network device.

In another example, as shown in FIG. 11, the first sequence may be the same as a second subset of the first transmit symbol. A start location of the second subset is before the second reference point, and an end location of the second subset is the first reference point or after the first reference point. A location and a length of the second subset may be set by the network device.

Optionally, in the foregoing two examples, a difference between the lengths of CP 2 and CP 1, namely, a length between the first reference point and the second reference point, is less than a length of the first sequence.

Optionally, the process of performing signal processing on the second set further includes a truncation operation. The truncation operation includes truncating the second transmit symbol. A truncation location is in the first sequence of the second transmit symbol.

In an example, when the first sequence is the all-zero sequence, a truncation length is the difference between the lengths of CP 2 and CP 1.

In another example, as shown in FIG. 11, when the first sequence is the same as the second subset of the first transmit symbol, a truncation part is a same symbol part between a header of the first transmit symbol and a tail of the second transmit symbol. For example, a symbol between reference point A and reference point B in the header of the first transmit symbol is the same as a symbol between reference point A' and reference point B' in the tail of the second transmit symbol. Therefore, the truncation part of the second set is a part between reference point A' and reference point B' in the tail of the second transmit symbol.

It should be understood that, due to a filter smearing effect, the term "same" does not necessarily mean "being the same in an absolute sense", but may mean "being approximately the same".

Optionally, after the second transmit symbol is truncated, the method 900 further includes: The transmitting end sends a first message. The first message includes information about a remaining part of the first sequence after the second transmit symbol is truncated, for example, location information and length information of the remaining part of the first sequence.

Correspondingly, a receiving end obtains the first message. The first message may be used by the receiving end to decode a part that is of the second transmit symbol and that is other than the first sequence, to obtain required data.

The location information of the remaining part of the first sequence may be a time domain index of the part. The length information of the remaining part of the first sequence may be a time length of the part, and the length may be represented by a quantity of complex-valued symbols included in the part.

In a possible case, after the IFFT, cyclic shift needs to be performed on the first transmit symbol and/or the second transmit symbol, to obtain the same symbol part between the header of the first transmit symbol and the tail of the second transmit symbol. In this case, the process of performing signal processing on the first set and/or the second set further includes the cyclic shift. Through the cyclic shift, the same symbol part between the header of the first transmit symbol and the tail of the second transmit symbol is obtained.

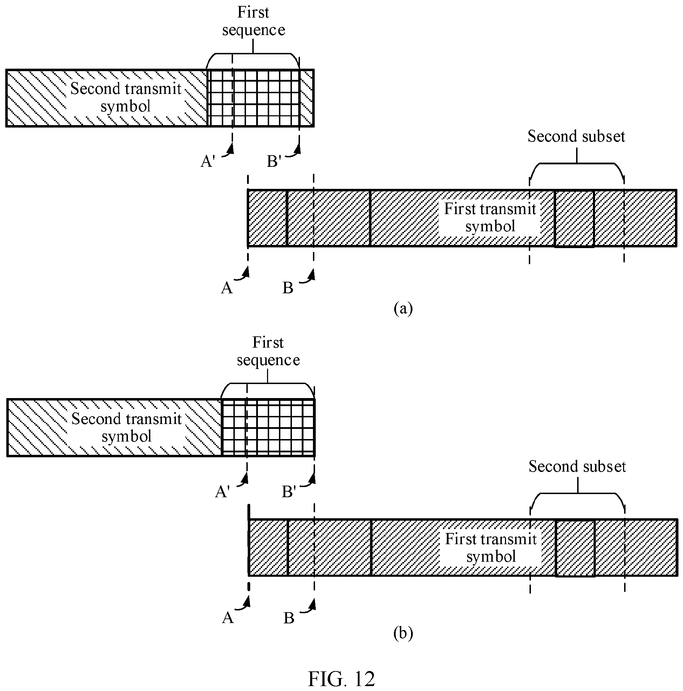

In a scenario shown in FIG. 12, a second transmit symbol in (a) in FIG. 12 needs to be cyclically shifted rightwards to a location of a second transmit symbol in (b) in FIG. 12, to obtain the same symbol part between the header of the first transmit symbol and the tail of the second transmit symbol.

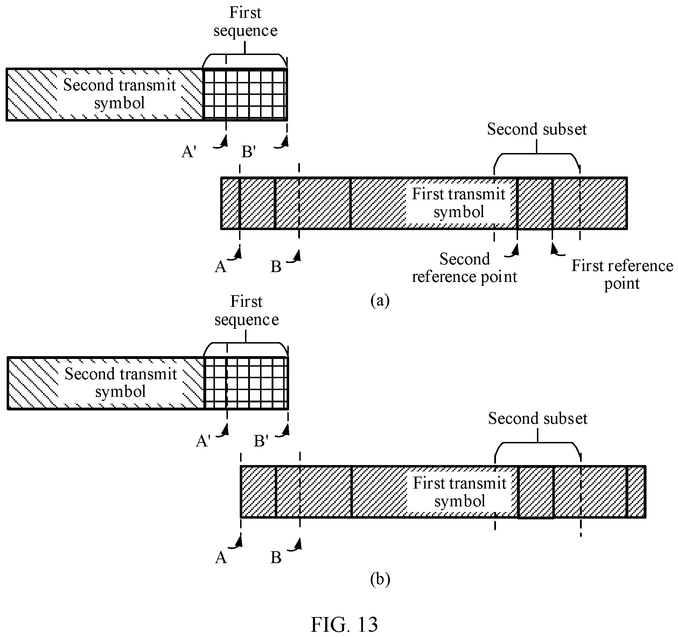

In a scenario shown in FIG. 13, a first transmit symbol in (a) in FIG. 13 needs to be cyclically shifted leftwards to a location of a first transmit symbol in (b) in FIG. 13, to obtain the same symbol part between the header of the first transmit symbol and the tail of the second transmit symbol.

In another possible scenario, cyclic shift needs to be performed simultaneously on the first transmit symbol and the second transmit symbol, to obtain the same symbol part between the header of the first transmit symbol and the tail of the second transmit symbol.

A total length of cyclic shift performed on the first transmit symbol and/or the second transmit symbol may be expressed as:

$$\left[ < CP >_{\frac{FFT_{size}}{n}} + \frac{FFT_{size}}{n} \right] T_s$$

n represents a quantity of subcarrier resource elements (resource elements, REs) transmitted in a system. $< CP >_{\frac{FFT_{size}}{n}}$ represents a remainder obtained by performing a modulo operation on the length of the CP and a time domain waveform interval ($FFT_{size}/n$), the quantity n of REs may further represent a size of DFT used in the system. $FFT_{size}$ represents a size of fast fourier transform fast fourier transform, FFT) used in the system. $T_s$ represents a sampling interval.

In this application, through the cyclic shift, the same symbol part between the tail of the second transmit symbol and the header of the first transmit symbol can be obtained. Further, after the truncation operation, waveforms are made consecutive at a symbol concatenated portion after the first transmit symbol and the second transmit symbol are combined into consecutive signals.

Optionally, when the method 900 is applied to the foregoing scenario 1, the process in which the transmitting end performs signal processing on the second set further includes DFT transform and IFFT transform. The mapping operation is performed on the second set before the DFT.

Optionally, when the method 900 is applied to the foregoing scenario 2, the process in which the transmitting end performs signal processing on the second set further includes up-sampling and filtering. The mapping operation is performed on the second set before the up-sampling.

It should be understood that the process in which the transmitting end performs signal processing on the second set further includes a CP addition operation, in other words, performing CP addition on the second transmit symbol. The length of the CP of the second transmit symbol may be a length of a CP that corresponds to an SCS of the second transmit symbol.

Signal processing is performed on the second set, so that the second transmit symbol that corresponds to the second set may be obtained.

S940: The transmitting end combines the first transmit symbol and the second transmit symbol obtained through the signal processing into the consecutive signals.

Step S940 may correspond to step S660 shown in FIG. 6, FIG. 7, and FIG. 8.

In S940, the transmitting end may combine the first transmit symbol and the second transmit symbol obtained in S930 into the consecutive signals, and the first transmit symbol is located after the second transmit symbol. That the first transmit symbol and the second transmit symbol are combined into the consecutive signals may also be understood that the first transmit symbol and the second transmit symbol are concatenated, so that the concatenated first transmit symbol and second transmit symbol are consecutive in time domain. For example, a time domain index of the end location of the second transmit symbol is N. If the first transmit symbol and the second transmit symbol are consecutive in time domain, a time domain index of a start location of the first transmit symbol is N+1.

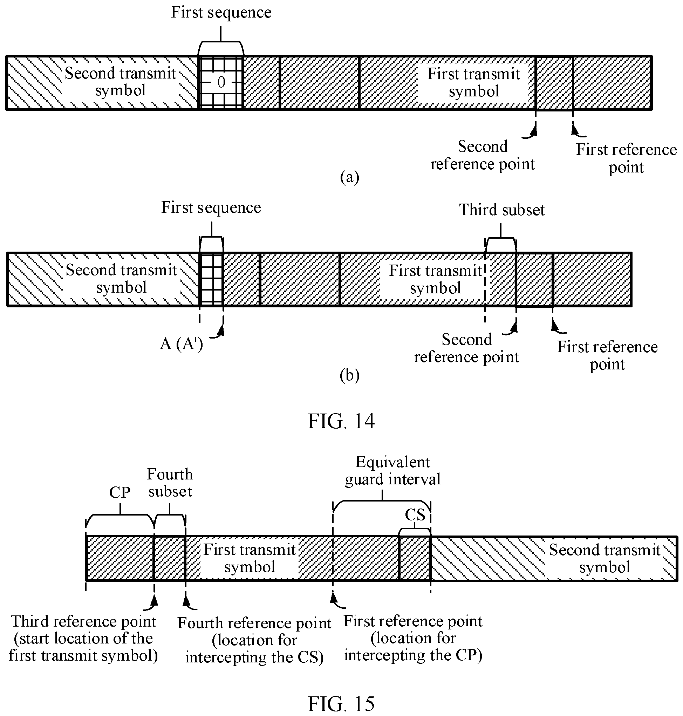

FIG. 14 is a diagram in which the first transmit symbol and the second transmit symbol obtained through the signal processing are combined into the consecutive signals.

In a possible case, when the first sequence is the all-zero sequence, the combined consecutive signals are shown in (a) in FIG. 14. In this case, the first sequence of the consecutive signals obtained by combining the first transmit symbol and the second transmit symbol is still the all-zero sequence. It may be understood that, if the truncation operation is performed on the second transmit symbol in S930, a quantity of zeros in the first sequence should be less than a quantity of zeros in the first sequence before the truncation operation. There is a segment of invalid information, namely, the all-zero sequence, between the first transmit symbol and the second transmit symbol. Therefore, a problem that waveforms are inconsecutive at a concatenated portion between the first transmit symbol and the second transmit symbol is avoided to some extent, to enhance consecutiveness between the first transmit symbol and the second transmit symbol.

In another possible case, when the first sequence is the same as a part of complex-valued symbols in the second transmit symbol, the combined consecutive signals are shown in (b) in FIG. 14. It may also be understood that, if the truncation operation is performed on the second transmit symbol in S930, the first sequence between the first transmit symbol and the second transmit symbol is the same as a third subset of the first transmit symbol. An end location of the third subset is the second reference point. In other words, a complex-valued symbol in the first sequence is the same as a segment of transmit symbol component that has a same length and that is before the second reference point. Therefore, waveforms are made consecutive at reference point A (A') between the first transmit symbol and the second transmit symbol that are combined into the consecutive signals. Therefore, this avoids the problem that the waveforms are inconsecutive at the symbol concatenated portion after the first transmit symbol and the second transmit symbol are combined into the consecutive signals, to enhance the consecutiveness between the first transmit symbol and the second transmit symbol.

S950: The transmitting end sends the first transmit symbol and the second transmit symbol.

In 9850, the transmitting end sends the first transmit symbol and the second transmit symbol that are combined into the consecutive signals. The first transmit symbol and the second transmit symbol are consecutive in time domain, and the first transmit symbol is located after the second transmit symbol.

Correspondingly, the receiving end obtains the first transmit symbol and the second transmit symbol, and performs signal processing on the obtained first transmit symbol and second transmit symbol.

A process in which the receiving end performs signal processing on the first transmit symbol may include one or more of the following steps:

Optionally, the process in which the receiving end performs signal processing on the first transmit symbol includes cyclic prefix removal. The cyclic prefix is the cyclic prefix that corresponds to the subcarrier spacing of the first transmit symbol, that is, CP 1.

Optionally, the process in which the receiving end performs signal processing on the first transmit symbol further includes a channel estimation operation.

Optionally, a process in which the receiving end performs signal processing on the second transmit symbol further includes a channel equalization operation, to obtain an estimated data signal. If the transmitting end performs cyclic shift on the second transmit symbol, the signal processing further includes performing phase compensation on a phase difference caused by the cyclic shift.

Optionally, the process in which the receiving end performs signal processing on the second transmit symbol further includes a channel decoding operation.

Specifically, the receiving end may learn of information about the first sequence in the received second transmit symbol based on the received first message, for example, location information and length information of the first sequence in the second transmit symbol. Therefore, the receiving end may decode, based on the information about the first sequence, the part that is of the second transmit symbol and that is other than the first sequence, to obtain the required data.

It should be understood that, in addition to embodiments provided in this specification, any other solution in which transmit symbols having the time domain structure shown in FIG. 5 can be generated also falls within the protection scope of this application.

The foregoing describes, with reference to FIG. 4 to FIG. 14, the method, provided in embodiments of this application, in which the cyclic prefix is used as the guard interval between the first transmit symbol and the second transmit symbol. The following describes, with reference to FIG. 15 to FIG. 18, a method, provided in embodiments of this application, in which a cyclic suffix (cyclic suffix, CS) is used to extend a guard interval between a first transmit symbol and a second transmit symbol.

The method includes: A transmitting end generates a first transmit symbol and a second transmit symbol. The first transmit symbol includes a cyclic suffix. The cyclic suffix is used to extend a guard interval between the first transmit symbol and the second transmit symbol, so that a start location of the guard interval is a first reference point, and an end location of the guard interval is an end location of the cyclic suffix of the first transmit symbol. The first reference point is a location for intercepting a cyclic prefix in the first transmit symbol. The transmitting end sends the first transmit symbol and the second transmit symbol. The first transmit symbol and the second transmit symbol are consecutive in time domain. The first transmit symbol is located before the second transmit symbol. The first transmit symbol is a symbol that carries a reference signal, and the second transmit symbol is a symbol that carries a data signal. The first transmit symbol may be, for example, a DMRS symbol.

In an example, a diagram of a time domain structure of the first transmit symbol and the second transmit symbol that are obtained by using the method is shown in FIG. 15.

In FIG. 15, the first reference point represents the location for intercepting the CP in the first transmit symbol, and a third reference point represents a start location of the first transmit symbol.

It should be noted that a start location of a transmit symbol is a start location of the transmit symbol, rather than a start location of a CP of the transmit symbol. Alternatively, from another perspective, it may be understood that the start location of the transmit symbol is an end location of the CP of the transmit symbol.

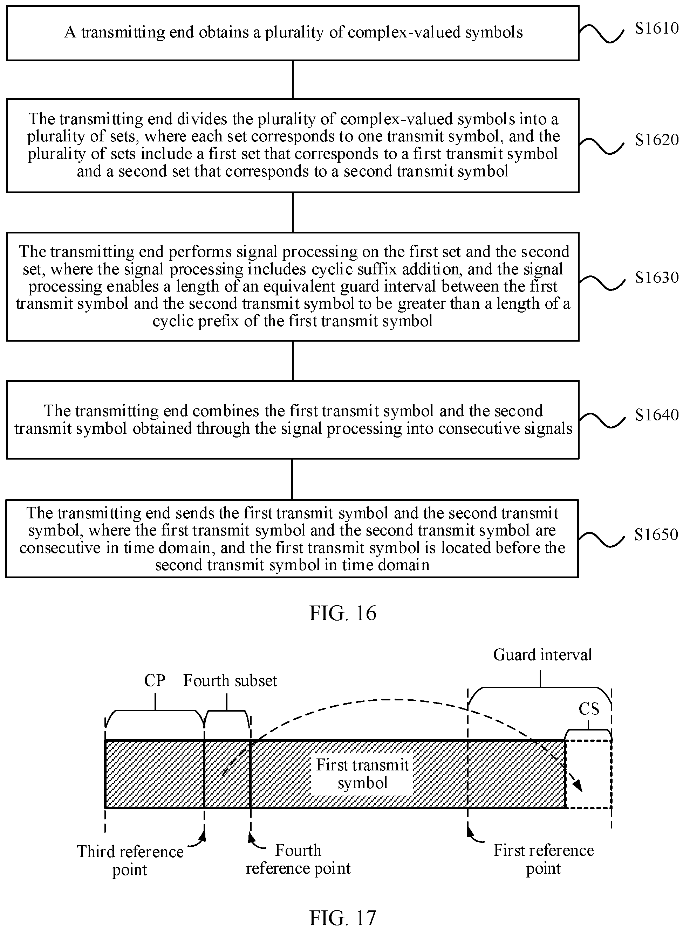

As shown in FIG. 15, the start location of the guard interval between the first transmit symbol and the second transmit symbol is the first reference point. The end location is the end location of the CS of the first transmit symbol. In other words, the guard interval between the first transmit symbol and the second transmit symbol includes a CS part of the first transmit symbol. The CS may be obtained by copying a fourth subset to a location after the first transmit symbol, as shown in FIG. 17. A start location of the fourth subset is the third reference point. An end location of the fourth subset, namely, a location (denoted as a fourth reference point) for intercepting the CS in the first transmit symbol, may be set by a network device.

It should be understood that there is a segment of special sequence (denoted as a second sequence, which is not shown in FIG. 15) in the second transmit symbol. The special sequence is located in a header of the second transmit symbol. The special sequence may be an all-zero sequence, or the special sequence may be the same as a segment of transmit symbol component that has a same length and that is after the fourth reference point. The existence of the special sequence helps avoid a problem that waveforms are inconsecutive at a concatenated portion after the first transmit symbol and the second transmit symbol are directly concatenated, to enhance consecutiveness between the first transmit symbol and the second transmit symbol.

A length of the guard interval between the first transmit symbol and the second transmit symbol is greater than a length of the CP of the first transmit symbol. Therefore, a multipath effect of a channel can be eliminated, and performance deterioration of DMRS based channel estimation is avoided. In addition, a location of the fourth reference point (the end location of the fourth subset) may be flexibly set by the network device based on an actual requirement. Therefore, a guard interval between symbols can be flexibly configured.

The following describes, with reference to FIG. 16, a specific procedure of generating the first transmit symbol and the second transmit symbol shown in FIG. 15.

FIG. 16 is a schematic flowchart of a symbol processing method according to another embodiment of this application. The method 1600 includes the following step S 1610 to step S 1650.

The method 1600 may be used to generate the transmit symbols shown in FIG. 15.

S1610: A transmitting end obtains a plurality of complex-valued symbols. This step is the same as S910 in the foregoing method embodiment. To avoid repetition, details are not described herein again.

S 1620: The transmitting end divides the plurality of complex-valued symbols into a plurality of sets.

The plurality of sets include a first set that corresponds to a first transmit symbol and a second set that corresponds to a second transmit symbol. The first transmit symbol and the second transmit symbol are consecutive in time domain. The first transmit symbol is located before the second transmit symbol.

S1630: The transmitting end performs signal processing on the first set and the second set.

The following describes, with reference to FIG. 17, a process in which the transmitting end performs signal processing on the first set.

The process of performing signal processing on the first set includes performing CS addition on the first transmit symbol. An SC is used to extend a guard interval between the first transmit symbol and the second transmit symbol. The signal processing enables a length of the guard interval between the first transmit symbol and the second transmit symbol to be greater than a length of a CP of the first transmit symbol. The guard interval includes a CS part of the first transmit symbol.

FIG. 17 is a diagram in which CS addition is performed on the first transmit symbol. CS addition performed on the first transmit symbol includes: performing a copy operation on a fourth subset of the first set, so that the fourth subset is used as the CS of the first transmit symbol.

As shown in FIG. 17, a start location of the fourth subset is a start location (a third reference point) of the first transmit symbol, and an end location of the fourth subset, namely, a location (a fourth reference point) for intercepting the CS in the first transmit symbol, may be set by a network device.

Optionally, the process of performing signal processing on the first set further includes performing CP addition on the first transmit symbol.

Optionally, when the method 1600 is applied to the foregoing scenario 1, before CS addition is performed on the first transmit symbol, the process of performing signal processing on the first set further includes DFT transform and IFFT transform.

Optionally, when the method 1600 is applied to the foregoing scenario 2, before CS addition is performed on the first transmit symbol, the process of performing signal processing on the first set further includes up-sampling and filtering.

Signal processing is performed on the first set, so that the first transmit symbol that corresponds to the first set may be obtained.

In this embodiment, CS addition is performed on the first transmit symbol, to extend the guard interval between the first transmit symbol and the second transmit symbol, so that the length of the guard interval between the first transmit symbol and the second transmit symbol is greater than the length of the CP of the first transmit symbol. This helps eliminate a multipath effect of a channel. When the first transmit symbol is a DMRS symbol, performance deterioration of DMRS based channel estimation can be avoided. In addition, a location of the fourth reference point (the location for intercepting the CS) may be flexibly set by the network device based on an actual requirement. Therefore, a guard interval between symbols can be flexibly configured.

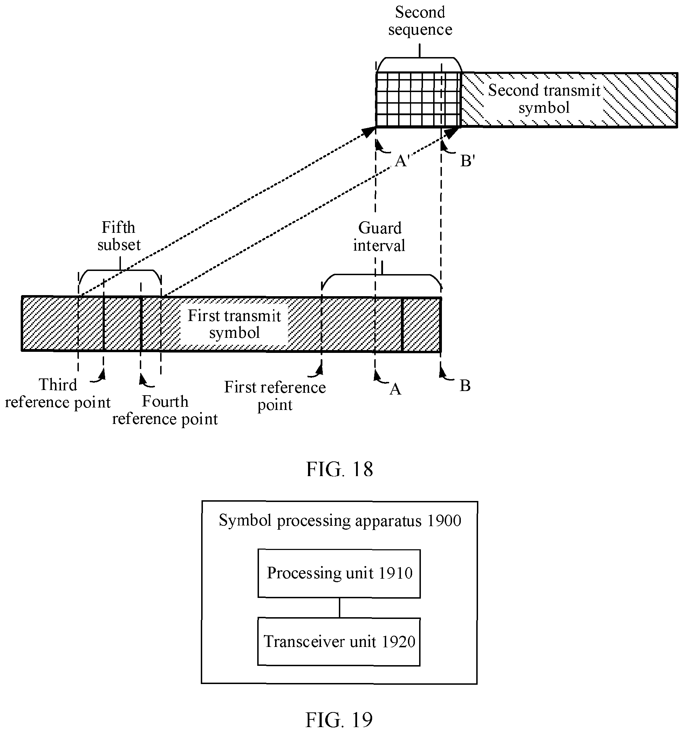

The following describes, with reference to FIG. 18, a process in which the transmitting end performs signal processing on the second set.

Optionally, the process of performing signal processing on the second set includes a mapping operation. The mapping operation includes mapping a second sequence to the second transmit symbol. The second sequence is used to replace a part of complex-valued symbols in the second transmit symbol. A start location for mapping the second sequence is a header of the second transmit symbol. That "the start location for mapping the second sequence is the header of the second transmit symbol" may be understood as follows: When the second transmit symbol includes a CP, the start location for mapping the second sequence is a start location of the CP of the second transmit symbol. When the second transmit symbol does not include a CP, the start location for mapping the second sequence is a start location of the second transmit symbol.

In an example, the second sequence may be an all-zero sequence. A quantity of zeros may be set by the network device.

In another example, as shown in FIG. 18, the second sequence may be the same as a fifth subset of the first transmit symbol. A start location of the fifth subset is the third reference point or before the third reference point, and an end location of the fifth subset is after the fourth reference point. A location and a length of the fifth subset may be set by the network device.

It should be understood that, in the foregoing two type examples, a length of the fourth subset is less than a length of the second sequence.

Optionally, the process of performing signal processing on the second set further includes a truncation operation. A truncation location is in the second sequence of the second transmit symbol.

In an example, when the second sequence is the all-zero sequence, a truncation length is the length of the fourth subset.

In another example, as shown in FIG. 18, when the second sequence is the same as the fifth subset of the first transmit symbol, a truncation part is a same symbol part between a tail of the first transmit symbol and a header of the second transmit symbol. For example, a symbol between reference point A and reference point B in the tail of the first transmit symbol is the same as a symbol between reference point A' and reference point B' in the header of the second transmit symbol. Therefore, the truncation part of the second set is a part between reference point A' and reference point B' in the header of the second transmit symbol.

Optionally, after the second transmit symbol is truncated, the method 1600 further includes: sending a second message. The second message includes information about a remaining part of the second sequence after the second transmit symbol is truncated, for example, location information and length information of the remaining part of the second sequence. Correspondingly, a receiving end receives the second message. The location information of the remaining part of the second sequence may be a time domain index of the part. The length information of the remaining part of the second sequence may be a time length of the part, and the length may be represented by a quantity of complex-valued symbols included in the part.

In a possible case, after the IFFT, cyclic shift needs to be performed on the first transmit symbol and/or the second transmit symbol, to obtain the same symbol part between the tail of the first transmit symbol and the header of the second transmit symbol. In this case, the process of performing signal processing on the first set and/or the second set further includes the cyclic shift. Through the cyclic shift, the same symbol part between the tail of the first transmit symbol and the header of the second transmit symbol is obtained.

It may be understood that, in the method 1600, a method for performing cyclic shift by the transmitting end on the first transmit symbol and/or the second transmit symbol is similar to a method for performing cyclic shift by the transmitting end on the first transmit symbol and/or the second transmit symbol in the method 800. To avoid repetition, details are not described herein again.

In this embodiment, through the cyclic shift, the same symbol part between the header of the second transmit symbol and the tail of the first transmit symbol can be obtained. Further, after the truncation operation, waveforms are made consecutive at a symbol concatenated portion after the first transmit symbol and the second transmit symbol are combined into consecutive signals.

Optionally, the process of performing signal processing on the first set further includes performing CP addition on the second transmit symbol.

Optionally, when the method 1600 is applied to the foregoing scenario 1, the process in which the transmitting end performs signal processing on the second set further includes DFT transform and IFFT transform. The mapping operation is performed on the second set before the

DFT.

Optionally, when the method 900 is applied to the foregoing scenario 2, the process in which the transmitting end performs signal processing on the second set further includes up-sampling and filtering. The mapping operation is performed on the second set before the up-sampling.

Signal processing is performed on the second set, so that the second transmit symbol that corresponds to the second set may be obtained.

S 1640 and S 1650 are similar to S940 and S950 in the foregoing method embodiment. To avoid repetition, details are not described herein again.

It should be understood that embodiments described in this specification may be independent solutions, or may be combined based on internal logic. These solutions all fall within the protection scope of this application.

It may be understood that, in the foregoing method embodiments, an execution body may be a terminal device or a component (for example, a chip or a circuit) that may be used in the terminal device, or may be a network device or a component (for example, a chip or a circuit) that may be used in the network device.

The foregoing describes the method embodiments provided in embodiments of this application, and the following describes apparatus embodiments provided in embodiments of this application. It should be understood that descriptions of the apparatus embodiments correspond to the descriptions of the method embodiments. Therefore, for content that is not described in detail, refer to the foregoing method embodiments. For brevity, details are not described herein again.

FIG. 19 is a schematic block diagram of a symbol processing apparatus 1900 according to an embodiment of this application. The apparatus 1900 is configured to perform the foregoing method embodiments. The apparatus 1900 may include a processing unit 1910 and a transceiver unit 1920. The processing unit 1910 may be configured to implement a corresponding processing function. The transceiver unit 1920 may be configured to implement a corresponding communication function. The transceiver unit 1920 may also be referred to as a communication interface or a communication unit.

In a first design, the apparatus 1900 may be the transmitting end in the foregoing embodiments, for example, may be the transmitting end or a circuit configured to implement the transmitting end. The transmitting end may be a terminal device, or may be a network device. The apparatus 1900 may implement corresponding steps or procedures performed by the transmitting end in the foregoing method embodiments. The processing unit 1910 may be configured to perform an operation related to signal processing of the transmitting end in the foregoing method embodiments. The transceiver unit 1920 may be configured to perform an operation related to receiving and sending of the transmitting end in the foregoing method embodiments.

In a possible implementation, the processing unit 1910 is configured to generate a first transmit symbol and a second transmit symbol. A length of a cyclic prefix of the first transmit symbol is greater than a length of a cyclic prefix that corresponds to a subcarrier spacing of the first transmit symbol. The transceiver unit 1920 is configured to send the first transmit symbol and the second transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal.

Optionally, in some embodiments, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

Optionally, in some embodiments, the processing unit 1910 is configured to map a first sequence to the second transmit symbol. The first sequence is used to replace a part of complex-valued symbols in the second transmit symbol. An end location for mapping the first sequence is an end location of the second transmit symbol.

Optionally, in some embodiments, a difference between the length of the cyclic prefix of the first transmit symbol and the length of the cyclic prefix that corresponds to the subcarrier spacing of the first transmit symbol is less than a length of the first sequence.

Optionally, in some embodiments, the first sequence is an all-zero sequence; or the first sequence is the same as a second subset of the first transmit symbol; a start location of the second subset is before the start location of the first subset; and an end location of the second subset is the first reference point or after the first reference point.

Optionally, in some embodiments, the processing unit 1910 is configured to truncate the second transmit symbol. A truncation location is in the first sequence.

Optionally, in some embodiments, when the first sequence is the all-zero sequence, a truncation length is the difference between the length of the cyclic prefix of the first transmit symbol and the length of the cyclic prefix that corresponds to the subcarrier spacing of the first transmit symbol. Alternatively, when the first sequence is the same as the second subset of the first transmit symbol, a truncation part is a same symbol part between a header of the first transmit symbol and a tail of the second transmit symbol.

Optionally, in some embodiments, the processing unit 1910 is configured to combine the generated first transmit symbol and second transmit symbol into consecutive signals.

Optionally, in some embodiments, the first sequence is the same as the second subset of the first transmit symbol. The processing unit 1910 is configured to perform cyclic shift on the second transmit symbol and/or the first transmit symbol, to obtain the same symbol part between the tail of the second transmit symbol and the header of the first transmit symbol.

Optionally, in some embodiments, after the second transmit symbol is truncated, the transceiver unit 1920 is configured to send a first message. The first message includes information about a remaining part of the first sequence after the second transmit symbol is truncated.

In a second design, the apparatus 1900 may be the receiving end in the foregoing embodiments, for example, may be a receiver or a circuit configured to implement the receiver. The receiving end may be a terminal device, or may be a network device. The apparatus 1900 may implement corresponding steps or procedures performed by the receiving end in the foregoing method embodiments. The processing unit 1910 may be configured to perform an operation related to signal processing of the receiving end in the foregoing method embodiments. The transceiver unit 1920 may be configured to perform an operation related to receiving and sending of the receiving end in the foregoing method embodiments.

In a possible implementation, the transceiver unit 1920 is configured to obtain a first transmit symbol and a second transmit symbol. A length of a cyclic prefix of the first transmit symbol is greater than a length of a cyclic prefix that corresponds to a subcarrier spacing of the first transmit symbol. The first transmit symbol and the second transmit symbol are consecutive in time domain. The first transmit symbol is located after the second transmit symbol in time domain. The first transmit symbol is a symbol that carries a reference signal, and the second transmit symbol is a symbol that carries a data signal. The processing unit 1910 is configured to perform signal processing on the first transmit symbol and the second transmit symbol.

Optionally, in some embodiments, the processing unit 1910 is configured to perform a cyclic prefix removal operation on the first transmit symbol and the second transmit symbol. Cyclic prefixes are cyclic prefixes that correspond to subcarrier spacings of the first transmit symbol and the second transmit symbol.

Optionally, in some embodiments, the cyclic prefix of the first transmit symbol is the same as a first subset of the first transmit symbol. A start location of the first subset is before a first reference point, and an end location of the first subset is an end location of the first transmit symbol. The first reference point is a location for intercepting the cyclic prefix that corresponds to the subcarrier spacing in the first transmit symbol.

Optionally, in some embodiments, the second transmit symbol includes a first sequence, and an end location of the first sequence is an end location of the second transmit symbol. The first sequence is an all-zero sequence; or the first sequence is the same as a third subset of the first transmit symbol, and an end location of the third subset is a location for intercepting the cyclic prefix in the first transmit symbol.

Optionally, in some embodiments, the transceiver unit 1920 is configured to obtain a first message. The first message includes information about the first sequence.

Optionally, in some embodiments, the processing unit 1910 is configured to decode, based on the information about the first sequence, a part that is of the second transmit symbol and that is other than the first sequence, to obtain data.

Optionally, the processing unit 1910 and the transceiver unit 1920 may be implemented by software, or may be implemented by hardware, or may be implemented by hardware and software. In addition, the processing unit 1910 and the transceiver unit 1920 may be different chips, or may be integrated into one chip or integrated circuit.

Optionally, in the foregoing embodiments, both the processing unit 1910 and the transceiver unit 1920 may be implemented by using a processor or a processor-related circuit.

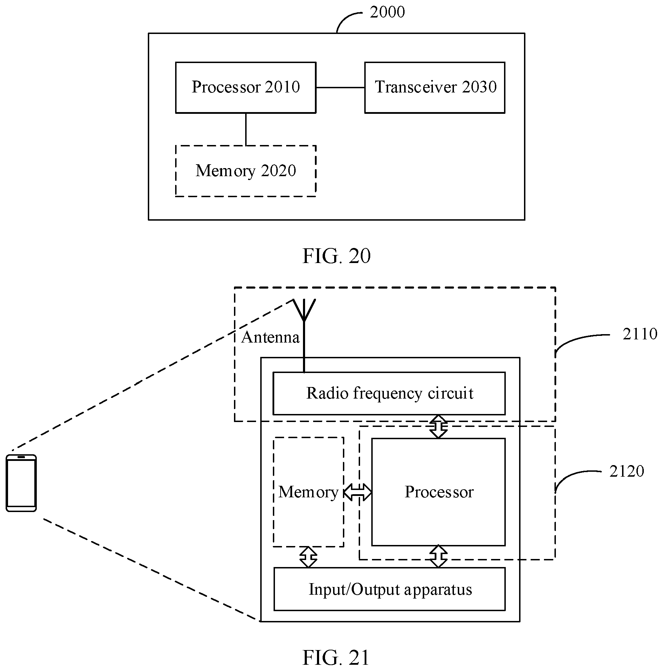

As shown in FIG. 20, an embodiment of this application further provides a symbol processing apparatus 2000. The apparatus 2000 includes a processor 2010 and a transceiver 2030. Optionally, the apparatus 2000 further includes a memory 2020. The memory 2020 stores a program. The processor 2010 is configured to execute the program stored in the memory 2020. Execution of the program stored in the memory 2020 enables the apparatus 2000 to be configured to perform the foregoing method embodiments.

An embodiment of this application further provides a communication apparatus. The communication apparatus may be a terminal device or a chip. The communication apparatus may be configured to perform the foregoing method embodiments.

When the communication apparatus is the terminal device, FIG. 21 is a simplified diagram of a structure of a terminal device. For ease of understanding and illustration, an example in which the terminal device is a mobile phone is used in FIG. 21. As shown in FIG. 21, the terminal device includes a processor, a radio frequency circuit, an antenna, and an input/output apparatus. The processor is mainly configured to: process a communication protocol and communication data, control the terminal device, execute a software program, process data of the software program, and so on. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. Optionally, the terminal device further includes a memory. The memory is mainly configured to store the software program and data. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 21 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 21, the terminal device includes a transceiver unit 2110 and a processing unit 2120. The transceiver unit 2110 may also be referred to as a transceiver, a transceiver machine, a transceiver apparatus, or the like. The processing unit 2120 may also be referred to as a processor, a processing board, a processing module, a processing apparatus, or the like. Optionally, a component that is in the transceiver unit 2110 and that is configured to implement a receiving function may be considered as a receiving unit, and a component that is in the transceiver unit 2110 and that is configured to implement a sending function may be considered as a sending unit. That is, the transceiver unit 2110 includes the receiving unit and the sending unit. The transceiver unit sometimes may also be referred to as a transceiver machine, a transceiver, a transceiver circuit, or the like. The receiving unit sometimes may also be referred to as a receiver, a receiver device, a receiver circuit, or the like. The sending unit sometimes may also be referred to as a transmitter, a transmitter device, a transmitter circuit, or the like.

For example, in an implementation, the processing unit 2120 is configured to perform the foregoing method embodiments. The transceiver unit 2110 is configured to perform related receiving and sending operations in the foregoing method embodiments. For example, the transceiver unit 2110 is configured to send or receive a DFT-s-OFDM symbol or an SC-QAM symbol.

It should be understood that FIG. 21 is merely an example instead of a limitation. The terminal device including the transceiver unit and the processing unit may not depend on the structure shown in FIG. 21.

When the communication apparatus is the chip, the chip includes a transceiver unit and a processing unit. The transceiver unit may be an input/output circuit or a communication interface. The processing unit may be a processor, a microprocessor, or an integrated circuit integrated into the chip.

An embodiment of this application further provides a communication apparatus. The communication apparatus may be a network device or a chip. The communication apparatus may be configured to perform the foregoing method embodiments. When the communication apparatus is the network device, for example, the communication apparatus is a base station.

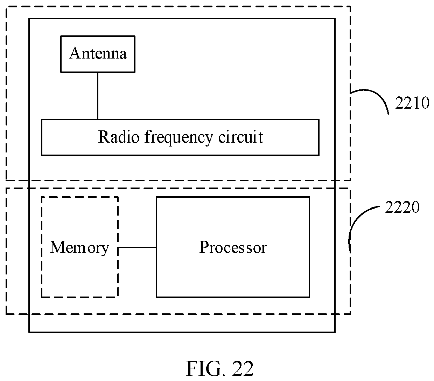

FIG. 22 is a simplified diagram of a structure of a base station. The base station includes a part 2210 and a part 2220. The part 2210 is mainly configured to: send and receive a radio frequency signal, and perform conversion between the radio frequency signal and a baseband signal. The part 2220 is mainly configured to: perform baseband processing, control the base station, and the like. The part 2210 may usually be referred to as a transceiver unit, a transceiver machine, a transceiver circuit, a transceiver, or the like. The part 2220 is usually a control center of the base station, and may usually be referred to as a processing unit, and is configured to control the base station to perform processing operations on a network device side in the foregoing method embodiments.

The transceiver unit in the part 2210 may also be referred to as a transceiver machine, a transceiver, or the like. The transceiver unit includes an antenna and a radio frequency unit. The radio frequency unit is mainly configured to perform radio frequency processing. Optionally, a component that is in the part 2210 and that is configured to implement a receiving function may be considered as a receiving unit, and a component that is configured to implement a sending function may be considered as a sending unit. That is, the part 2210 includes the receiving unit and the sending unit. The receiving unit may also be referred to as a receiver, a receiver device, a receiving circuit, or the like. The sending unit may be referred to as a transmitter, a transmitter device, a transmitting circuit, or the like.

The part 2220 may include one or more boards, and each board may include one or more processors. Optionally, each board may further include one or more memories. The processor is configured to read and execute a program in the memory, to implement a baseband processing function and control over the base station. If there are a plurality of boards, the boards may be interconnected with each other, to enhance a processing capability. In an optional implementation, a plurality of boards may share one or more processors, or a plurality of boards share one or more memories, or a plurality of boards share one or more processors at the same time.

For example, in an implementation, the part 2220 is configured to perform the foregoing method embodiments. The part 2210 is configured to perform related receiving and sending operations in the foregoing method embodiments. For example, the part 2210 is configured to send or receive a DFT-s-OFDM symbol or an SC-QAM symbol.

It should be understood that FIG. 22 is merely an example instead of a limitation. The network device including the transceiver unit and the processing unit may not depend on the structure shown in FIG. 22.

When the communication apparatus is the chip, the chip includes a transceiver unit and a processing unit. The transceiver unit may be an input/output circuit or a communication interface. The processing unit is a processor, a microprocessor, or an integrated circuit integrated into the chip.

The terminal device in embodiments of this application includes a handheld device, a vehicle-mounted device, a wearable device, or a computing device that has a wireless communication function. In an example, the terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. For example, the terminal device may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal device may be a terminal device in a 5G network, a terminal device in a future evolved public land mobile communication network (public land mobile network, PLMN), or the like.

The network device in embodiments of this application may be configured to communicate with one or more terminal devices, or may be configured to communicate with one or more base stations having some terminal functions (for example, communicate with a macro base station and a micro base station, for example, an access point). The network device may be referred to as a base station. The base station may have multiple forms, such as a macro base station, a micro base station, a relay station, and an access point. For example, the related network device in embodiments of this application may be a base station in new radio (new radio, NR), a base transceiver station (base transceiver station, BTS) in a global system for mobile communications (global system for mobile communications, GSM) or code division multiple access (code division multiple access, CDMA), a NodeB (NodeB, NB) in a wideband code division multiple access

(wideband code division multiple access, WCDMA) system, or an evolved NodeB (evolved NodeB, eNB or eNodeB) in a long term evolution (long term evolution, LTE) system. The base station in 5G NR may also be referred to as a transmission reception point (transmission reception point, TRP) or a next generation NodeB (next generation NodeB, gNB).

An embodiment of this application further provides a computer-readable storage medium. The computer-readable storage medium stores a computer program. When the computer program is executed by a computer, the computer is enabled to implement the foregoing method embodiments.

An embodiment of this application further provides a computer program product including instructions. When the instructions are executed by a computer, the computer is enabled to implement the foregoing method embodiments.

For explanations and beneficial effects of related content in any communication apparatus provided above, refer to the foregoing corresponding method embodiments. Details are not described herein again.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located at one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A symbol processing method, comprising:

   generating, by a transmitting end, a first transmit symbol and a second transmit symbol, wherein a length of a cyclic prefix of the first transmit symbol is greater than a length of a cyclic prefix that corresponds to a subcarrier spacing of the first transmit symbol; and
   sending, by the transmitting end, the first transmit symbol and the second transmit symbol, wherein
   the first transmit symbol and the second transmit symbol are consecutive in time domain, and the first transmit symbol is located after the second transmit symbol in time domain; and the first transmit symbol is a symbol that carries a reference signal, and the second transmit symbol is a symbol that carries a data signal.

2. The method according to claim 1, wherein
   the cyclic prefix of the first transmit symbol is the same as a first subset of the first transmit symbol; a start location of the first subset is before a first reference point, and an end location of the first subset is an end location of the first transmit symbol; and the first reference point is a location for intercepting the cyclic prefix that corresponds to the subcarrier spacing in the first transmit symbol.

3. The method according to claim 1 or 2, wherein the generating, by a transmitting end, a second transmit symbol comprises:
   mapping, by the transmitting end, a first sequence to the second transmit symbol, wherein the first sequence is used to replace a part of complex-valued symbols in the second transmit symbol, and an end location for mapping the first sequence is an end location of the second transmit symbol.

4. The method according to claim 3, wherein
   a difference between the length of the cyclic prefix of the first transmit symbol and the length of the cyclic prefix that corresponds to the subcarrier spacing of the first transmit symbol is less than a length of the first sequence.

5. The method according to claim 3 or 4, wherein

   the first sequence is an all-zero sequence; or
   the first sequence is the same as a second subset of the first transmit symbol; a start location of the second subset is before the start location of the first subset; and an end location of the second subset is the first reference point or after the first reference point.

6. The method according to any one of claims 3 to 5, wherein the generating, by a transmitting end, a second transmit symbol further comprises:

truncating, by the transmitting end, the second transmit symbol, wherein a truncation location is in the first sequence.

7. The method according to claim 6, wherein

when the first sequence is the all-zero sequence, a truncation length is the difference between the length of the cyclic prefix of the first transmit symbol and the length of the cyclic prefix that corresponds to the subcarrier spacing of the first transmit symbol; or
when the first sequence is the same as the second subset of the first transmit symbol, a truncation part is a same symbol part between a header of the first transmit symbol and a tail of the second transmit symbol.

8. The method according to claim 7, wherein the method further comprises:
combining, by the transmitting end, the generated first transmit symbol and second transmit symbol into consecutive signals.

9. The method according to claim 7 or 8, wherein the first sequence is the same as the second subset of the first transmit symbol, and the method further comprises:
performing, by the transmitting end, cyclic shift on at least one of the following: the second transmit symbol and the first transmit symbol, to obtain the same symbol part between the tail of the second transmit symbol and the header of the first transmit symbol.

10. The method according to any one of claims 6 to 9, wherein after the truncating, by the transmitting end, the second transmit symbol, the method further comprises:
sending, by the transmitting end, a first message, wherein the first message comprises information about a remaining part of the first sequence after the second transmit symbol is truncated.

11. A symbol processing method, comprising:

obtaining, by a receiving end, a first transmit symbol and a second transmit symbol, wherein a length of a cyclic prefix of the first transmit symbol is greater than a length of a cyclic prefix that corresponds to a subcarrier spacing of the first transmit symbol; the first transmit symbol and the second transmit symbol are consecutive in time domain, and the first transmit symbol is located after the second transmit symbol in time domain; and the first transmit symbol is a symbol that carries a reference signal, and the second transmit symbol is a symbol that carries a data signal; and
performing, by the receiving end, signal processing on the first transmit symbol and the second transmit symbol.

12. The method according to claim 11, wherein the performing, by the receiving end, signal processing on the first transmit symbol and the second transmit symbol comprises:
performing, by the receiving end, a cyclic prefix removal operation on the first transmit symbol and the second transmit symbol, wherein cyclic prefixes are cyclic prefixes that correspond to subcarrier spacings of the first transmit symbol and the second transmit symbol.

13. The method according to claim 11 or 12, wherein
the cyclic prefix of the first transmit symbol is the same as a first subset of the first transmit symbol; a start location of the first subset is before a first reference point, and an end location of the first subset is an end location of the first transmit symbol; and the first reference point is a location for intercepting the cyclic prefix that corresponds to the subcarrier spacing in the first transmit symbol.

14. The method according to any one of claims 11 to 13, wherein

the second transmit symbol comprises a first sequence, and an end location of the first sequence is an end location of the second transmit symbol; and
the first sequence is an all-zero sequence; or
the first sequence is the same as a third subset of the first transmit symbol, and an end location of the third subset is a location for intercepting the cyclic prefix in the first transmit symbol.

15. The method according to claim 14, wherein the method further comprises:
obtaining, by the receiving end, a first message, wherein the first message comprises information about the first sequence.

**16.** The method according to claim 15, wherein the performing, by the receiving end, signal processing on the second transmit symbol comprises:
decoding, by the receiving end based on the information about the first sequence, a part that is of the second transmit symbol and that is other than the first sequence, to obtain data.

**17.** A symbol processing apparatus, comprising:

a processing unit, configured to generate a first transmit symbol and a second transmit symbol, wherein a length of a cyclic prefix of the first transmit symbol is greater than a length of a cyclic prefix that corresponds to a subcarrier spacing of the first transmit symbol; and
a transceiver unit, configured to send the first transmit symbol and the second transmit symbol, wherein the first transmit symbol and the second transmit symbol are consecutive in time domain, and the first transmit symbol is located after the second transmit symbol in time domain; and the first transmit symbol is a symbol that carries a reference signal, and the second transmit symbol is a symbol that carries a data signal.

**18.** The apparatus according to claim 17, wherein
the cyclic prefix of the first transmit symbol is the same as a first subset of the first transmit symbol; a start location of the first subset is before a first reference point, and an end location of the first subset is an end location of the first transmit symbol; and the first reference point is a location for intercepting the cyclic prefix that corresponds to the subcarrier spacing in the first transmit symbol.

**19.** The apparatus according to claim 17 or 18, wherein the processing unit is configured to:
map a first sequence to the second transmit symbol, wherein the first sequence is used to replace a part of complex-valued symbols in the second transmit symbol, and an end location for mapping the first sequence is an end location of the second transmit symbol.

**20.** The apparatus according to claim 19, wherein
a difference between the length of the cyclic prefix of the first transmit symbol and the length of the cyclic prefix that corresponds to the subcarrier spacing of the first transmit symbol is less than a length of the first sequence.

**21.** The apparatus according to claim 19 or 20, wherein

the first sequence is an all-zero sequence; or
the first sequence is the same as a second subset of the first transmit symbol; a start location of the second subset is before the start location of the first subset; and an end location of the second subset is the first reference point or after the first reference point.

**22.** The apparatus according to any one of claims 19 to 21, wherein the processing unit is further configured to:
truncate the second transmit symbol, wherein a truncation location is in the first sequence.

**23.** The apparatus according to claim 22, wherein

when the first sequence is the all-zero sequence, a truncation length is the difference between the length of the cyclic prefix of the first transmit symbol and the length of the cyclic prefix that corresponds to the subcarrier spacing of the first transmit symbol; or
when the first sequence is the same as the second subset of the first transmit symbol, a truncation part is a same symbol part between a header of the first transmit symbol and a tail of the second transmit symbol.

**24.** The apparatus according to claim 23, wherein the processing unit is further configured to:
combine the generated first transmit symbol and second transmit symbol into consecutive signals.

**25.** The apparatus according to claim 23 or 24, wherein the first sequence is the same as the second subset of the first transmit symbol, and the processing unit is further configured to:
perform cyclic shift on at least one of the following: the second transmit symbol and the first transmit symbol, to obtain the same symbol part between the tail of the second transmit symbol and the header of the first transmit symbol.

**26.** The apparatus according to any one of claims 22 to 25, wherein after the second transmit symbol is truncated, the transceiver unit is further configured to:

send a first message, wherein the first message comprises information about a remaining part of the first sequence after the second transmit symbol is truncated.

27. A symbol processing apparatus, comprising:

a transceiver unit, configured to obtain a first transmit symbol and a second transmit symbol, wherein a length of a cyclic prefix of the first transmit symbol is greater than a length of a cyclic prefix that corresponds to a subcarrier spacing of the first transmit symbol; the first transmit symbol and the second transmit symbol are consecutive in time domain, and the first transmit symbol is located after the second transmit symbol in time domain; and the first transmit symbol is a symbol that carries a reference signal, and the second transmit symbol is a symbol that carries a data signal; and
a processing unit, configured to perform signal processing on the first transmit symbol and the second transmit symbol.

28. The apparatus according to claim 27, wherein the processing unit is further configured to:
perform a cyclic prefix removal operation on the first transmit symbol and the second transmit symbol, wherein cyclic prefixes are cyclic prefixes that correspond to subcarrier spacings of the first transmit symbol and the second transmit symbol.

29. The apparatus according to claim 27 or 28, wherein
the cyclic prefix of the first transmit symbol is the same as a first subset of the first transmit symbol; a start location of the first subset is before a first reference point, and an end location of the first subset is an end location of the first transmit symbol; and the first reference point is a location for intercepting the cyclic prefix that corresponds to the subcarrier spacing in the first transmit symbol.

30. The apparatus according to any one of claims 27 to 29, wherein

the second transmit symbol comprises a first sequence, and an end location of the first sequence is an end location of the second transmit symbol; and
the first sequence is an all-zero sequence; or
the first sequence is the same as a third subset of the first transmit symbol, and an end location of the third subset is a location for intercepting the cyclic prefix in the first transmit symbol.

31. The apparatus according to claim 30, wherein the transceiver unit is further configured to:
obtain a first message, wherein the first message comprises information about the first sequence.

32. The apparatus according to claim 31, wherein the processing unit is further configured to:
decode, based on the information about the first sequence, a part that is of the second transmit symbol and that is other than the first sequence, to obtain data.

33. A communication apparatus, comprising:
a processor, configured to execute a computer program stored in a memory, to enable the communication apparatus to perform the method according to any one of claims 1 to 10, or to enable the communication apparatus to perform the method according to any one of claims 11 to 16.

34. A chip, comprising a logic circuit and a communication interface, wherein the communication interface is configured to input to-be-processed data and/or information, and transmit the to-be-processed data and/or information to the logic circuit, the logic circuit is configured to perform encoding processing according to any one of claims 1 to 16, and the communication interface is further configured to output an encoded polar codeword.

35. A computer-readable storage medium, wherein the computer-readable storage medium is configured to store a computer program, and when the computer program is run on a computer, the computer is enabled to perform the method according to any one of claims 1 to 10, or the computer is enabled to perform the method according to any one of claims 11 to 16.

36. A computer program product, wherein the computer program product comprises instructions used to perform the method according to any one of claims 1 to 10, or the computer program product comprises instructions used to perform the method according to any one of claims 11 to 16.

Transmit
symbol 1

Transmit
symbol 2

Cyclic prefix
(CP)

Location for
intercepting the CP

CP

Location for
intercepting the CP

FIG. 1

Receive window of
transmit symbol 1

Receive window of
transmit symbol 2

Case 1: A
maximum
multipath delay
does not exceed a
length of the CP

Transmit
symbol 1

Transmit
symbol 2

CP

CP

Case 2: A maximum
multipath delay
exceeds a length of
the CP

Transmit
symbol 1

Transmit
symbol 2

CP

CP

FIG. 2

Length of the DMRS symbol

SCS
size of
the
DMRS
symbol

DMRS
symbol

Data
symbol

FIG. 3

A transmitting end generates a first transmit symbol and a second transmit symbol, where a length of a cyclic prefix of the first transmit symbol is greater than a length of a cyclic prefix that corresponds to a subcarrier spacing of the first transmit symbol

S410

The transmitting end sends the first transmit symbol and the second transmit symbol, where the first transmit symbol and the second transmit symbol are consecutive in time domain, and the first transmit symbol is located after the second transmit symbol; and the first transmit symbol is a symbol that carries a reference signal, and the second transmit symbol is a symbol that carries a data signal

S420

FIG. 4

CP 2

First subset

Second transmit
symbol

First transmit
symbol

Second reference point
(location for
intercepting CP 2)

First reference point
(location for
intercepting CP 1)

FIG. 5

S620                    S640                                              S660

Complex-valued
symbols
(complex-valued        First
symbols)               set      Perform        First transmit
                               signal          symbol
                    Group      processing on                   Combine
                               the first set                   into            Transmit
                    Second                                     consecutive     symbol
                    set        Perform        Second transmit  signals
                               signal         symbol
                               processing on
                               the second set

FIG. 6

FIG. 7

S620

S640

S660

Complex-
valued
symbols → Group

First
set → Up-
sampling → Filtering → CP
addition → First
transmit
symbol

Second
set → Mapping
operation → Up-
sampling → Filtering → CP
addition → Truncation
operation → Second
transmit
symbol

Combine
into
consecutive
signals → Transmit
symbol

FIG. 8

A transmitting end obtains a plurality of complex-valued symbols — S910

The transmitting end divides the plurality of complex-valued symbols into a plurality of sets, where each set corresponds to one transmit symbol, and the plurality of sets include a first set that corresponds to a first transmit symbol and a second set that corresponds to a second transmit symbol — S920

The transmitting end performs signal processing on the first set and the second set, where the signal processing includes cyclic prefix addition, and the signal processing enables a length of a cyclic prefix of the first transmit symbol to be greater than a length of a cyclic prefix that corresponds to a subcarrier spacing of the first transmit symbol — S930

The transmitting end combines the first transmit symbol and the second transmit symbol obtained through the signal processing into consecutive signals — S940

The transmitting end sends the first transmit symbol and the second transmit symbol, where the first transmit symbol and the second transmit symbol are consecutive in time domain, and the first transmit symbol is located after the second transmit symbol in time domain — S950

FIG. 9

CP 2

First subset

First transmit
symbol

Second reference point
(location for
intercepting CP 2)

First reference point
(location for
intercepting CP 1)

FIG. 10

First
sequence

Second transmit
symbol

A'    B'

Second
subset

First transmit
symbol

A    B

Second
reference point

First reference point

FIG. 11

FIG. 12

First
sequence

Second transmit
symbol

A'   B'

Second subset

First transmit
symbol

A   B

Second
reference point

First reference
point

(a)

First
sequence

Second transmit
symbol

A'   B'

Second subset

First transmit
symbol

A   B

(b)

FIG. 13

First sequence

Second transmit symbol | 0 | First transmit symbol

Second reference point

First reference point

(a)

First sequence

Third subset

Second transmit symbol

First transmit symbol

A (A')

Second reference point

First reference point

(b)

FIG. 14

CP

Fourth subset

Equivalent guard interval

CS

First transmit symbol

Second transmit symbol

Third reference point (start location of the first transmit symbol)

Fourth reference point (location for intercepting the CS)

First reference point (location for intercepting the CP)

FIG. 15

A transmitting end obtains a plurality of complex-valued symbols | S1610

The transmitting end divides the plurality of complex-valued symbols into a plurality of sets, where each set corresponds to one transmit symbol, and the plurality of sets include a first set that corresponds to a first transmit symbol and a second set that corresponds to a second transmit symbol | S1620

The transmitting end performs signal processing on the first set and the second set, where the signal processing includes cyclic suffix addition, and the signal processing enables a length of an equivalent guard interval between the first transmit symbol and the second transmit symbol to be greater than a length of a cyclic prefix of the first transmit symbol | S1630

The transmitting end combines the first transmit symbol and the second transmit symbol obtained through the signal processing into consecutive signals | S1640

The transmitting end sends the first transmit symbol and the second transmit symbol, where the first transmit symbol and the second transmit symbol are consecutive in time domain, and the first transmit symbol is located before the second transmit symbol in time domain | S1650

FIG. 16

FIG. 17

Second
sequence

Second transmit
symbol

A'    B'

Fifth
subset

Guard
interval

First transmit
symbol

Third
reference point        First reference    A        B
              Fourth        point
         reference point

FIG. 18

Symbol processing apparatus 1900

Processing unit 1910

Transceiver unit 1920

FIG. 19

2000

Processor 2010 —— Transceiver 2030

Memory 2020

FIG. 20

Antenna

Radio frequency circuit

2110

Memory ⇄ Processor

2120

Input/Output apparatus

FIG. 21

FIG. 22

**INTERNATIONAL SEARCH REPORT**

| International application No. |
| --- |
| **PCT/CN2023/072294** |

| A. | CLASSIFICATION OF SUBJECT MATTER |
| --- | --- |

H04W 16/10(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 参考信号, 长度, 调整, 额外, 解调参考信号, 扩展, 扩展循环前缀, 另外, 添加, 校正, 循环前缀, 增长, 增加, 重复, additional, CP, DMRS, ECP, reference signal, length, increase, cyclic prefix, repeat

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 102598614 A (QUALCOMM INC.) 18 July 2012 (2012-07-18) description, paragraphs [0030]-[0053] and [0094]-[0104], and figures 2 and 4 | 1-36 |
| Y | CN 112838915 A (BEIJING SAMSUNG TELECOM R&D CENTER et al.) 25 May 2021 (2021-05-25) claims 1-2 | 1-36 |
| Y | CN 108289325 A (ZTE CORP.) 17 July 2018 (2018-07-17) description, paragraphs [0262]-[0272] | 1-36 |
| A | WO 2017052489 A1 (INTEL CORP.) 30 March 2017 (2017-03-30) entire document | 1-36 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 April 2023** | **17 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

International application No.

**PCT/CN2023/072294**

| Patent document cited in search report | | | Publication date (day/month/year) | Patent family member(s) | | | Publication date (day/month/year) |
|---|---|---|---|---|---|---|---|
| CN | 102598614 | A | 18 July 2012 | US | 2011128909 | A1 | 02 June 2011 |
| CN | 112838915 | A | 25 May 2021 | EP | 3895363 | A1 | 20 October 2021 |
| CN | 108289325 | A | 17 July 2018 | US | 2020044796 | A1 | 06 February 2020 |
| WO | 2017052489 | A1 | 30 March 2017 | US | 2020304237 | A1 | 24 September 2020 |

44

**REFERENCES CITED IN THE DESCRIPTION**

**Patent documents cited in the description**

- CN 202210114048X